# EUROPEAN PATENT APPLICATION

(11) **EP 3 904 788 A1**
(43) Date of publication of application: **03.11.2021**
(21) Application number: 21170483.8
(22) Date of filing: 26.04.2021
(51) Int. Cl.: F25B 43/04, F25B 49/02

(54) **HVACR PURGE SYSTEM WITH ADSORBENT REFRIGERANT SEPARATION**

(30) Priority: 30.04.2020 US 202063018269 P; 30.04.2020 US 202063018274 P
(71) Applicant: Trane International Inc., Davidson, NC 28036 (US)
(72) Inventor: MANESHI, Abolfazl, La Crosse, Wisconsin, 54601 (US); PEREZ-BLANCO, Marcos Eric, La Crosse, Wisconsin, 54601 (US); SORENSON, Elyse M, Stoddard, Wisconsin, 54658 (US); DOUD, Ryan, Trempealeau, Wisconsin, 54661 (US); SIBIK, Lee L, Onalaska, Wisconsin, 54650 (US); GALLANT, Erica L, Onalaska, Wisconsin, 54650 (US); WOLD, John R, La Crosse, Wisconsin, 54601 (US); SCHULTZ, Kenneth J, Onalaska, Wisconsin, 54650 (US)
(74) Representative: Haseltine Lake Kempner LLP

(57) **Abstract**

Purge systems for heating, ventilation, air conditioning, and refrigeration (HVACR) circuits in chillers can use adsorbent and/or membranes to separate refrigerant from non-condensable gases, allowing the non-condensables to be exhausted while the working fluid can be recovered and returned to the HVACR circuit. The purge systems can include one or more separation chambers including either an adsorbent material or a selectively permeable membrane. The selectively permeable membrane can be solubility-based for its selectivity. Optionally, a pusher pump can be upstream of the separation chambers to pressurize the purge gas through the purge system, including in the separation chamber. The purge system can be controlled using a model correlating pressure differentials in the purge system with purge gas conditions such as non-condensable and working fluid concentrations.

## Description

### Field

This disclosure is directed to purge systems for use with chiller systems, particularly purge systems recovering working fluid using an adsorbent and/or a membrane.

### Background

Low-pressure chiller systems include refrigeration circuits that operate at pressures that are below atmospheric pressure. Accordingly, any leaks in the circuit of such chillers allow non-condensable gases to enter the circuit and mix with the working fluid, reducing effectiveness of the circuit. Vapor can be expelled from the system to purge the non-condensable gases from the circuit. Existing processes include recovery of the working fluid by thermal distillation.

### Summary

This disclosure is directed to purge systems for use with chiller systems, particularly purge systems recovering working fluid using an adsorbent and/or a membrane.

Using either an adsorbent to which working fluid adsorbs, which is regenerated by vacuum, and/or a membrane selectively permeable to the working fluid to separate working fluid from the non-condensables can allow the separation to improved. Further, this improved separation can be performed at temperatures that will not lead to degradation of modern, low-global warming potential (GWP) refrigerants.

A pump of the purge system can be included upstream of the separation chamber. When the separation chamber contains an adsorbent, the pressurization of the purge gas flow by the pump can improve adsorption. When the separation chamber contains a membrane, the pressurization of the purge gas flow by the pump can result in more of the working fluid permeating the membrane. Further, this pressure can drive both the non-condensables to be purged and the recovered working fluid through the system, reducing the number of required pumps in some configurations.

The efficiency of the purge can be determined in such systems based on a mathematical model using a pressure relationship. The pressure relationship can be expressed as a ratio, removing variance with factors such as ambient temperature. This control allows non-condensables to be exhausted from the purge system at a rate that prevents excessive amounts of working fluid from being expelled with the non-condensable gasses.

In an embodiment, a purge system for a heating, ventilation, air conditioning, and refrigeration (HVACR) system includes a purge gas inlet configured to receive a mixture including one or more working fluids and one or more non-condensable gases, a first pump, and one or more separation chambers. Each separation chamber contains adsorbent material. Each separation chamber is configured to receive the mixture through a chamber valve. The purge system further includes an exhaust port configured to release gas into an ambient environment. The exhaust port is in fluid communication with the one or more separation chambers by way of an exhaust valve. The purge system includes a working fluid return line in communication with at least one of the one or more separation chambers. The working fluid return line is configured to be connected to the HVACR system. The purge system further includes a second pump. The second pump is in communication with at least one of the one or more separation chambers by way of a return line valve and the working fluid return line.

In an embodiment, the adsorbent material is configured to adsorb the one or more working fluids when the mixture is provided to the separation chamber through the chamber valve. In an embodiment, the adsorbent material is configured to release the one or more working fluids when the chamber valve and the exhaust valve are closed, the return line valve is open, and the second pump is in operation.

In an embodiment, the first pump is between the purge gas inlet and the one or more separation chambers. In an embodiment, the first pump is between the one or more separation chambers and the exhaust port.

In an embodiment, the purge system further includes a plurality of temperature sensors configured to measure temperatures at different points in the separation chamber and a controller configured to determine a temperature difference between temperature measurements from at least two of the plurality of temperature sensors and control the chamber valve, the exhaust valve, and the second pump based on the temperature difference.

In an embodiment, the purge system further includes a sensor configured to measure a weight of the separation chamber and a controller configured to control the chamber valve, the exhaust valve, and the second pump based on the weight of the separation chamber.

In an embodiment, the purge system further includes a pressure sensor configured to measure a pressure within the separation chamber, and a controller configured to control the chamber valve, the exhaust valve, and the second pump based on the pressure within the separation chamber.

In an embodiment, the pressure relationship is a ratio between the first pressure and the second pressure.

In an embodiment, determining operation of the discharge valve comprises comparing the pressure relationship to a threshold value.

In an embodiment, a heating, ventilation, air conditioning, and refrigeration (HVACR) system includes a refrigeration circuit. The refrigeration circuit includes a compressor, a condenser, an expander, and an evaporator. The refrigeration circuit configured to circulate one or more working fluids. The HVACR system further includes a purge system including a purge gas inlet configured to receive a mixture including the one or more working fluids and one or more non-condensable gases, a first pump, and one or more separation chambers. Each separation chamber contains adsorbent material. Each separation chamber is configured to receive the mixture through a chamber valve. The purge system further includes an exhaust port configured to release gas into an ambient environment. The exhaust port is in fluid communication the one or more separation chambers by way of an exhaust valve. The purge system also includes a working fluid return line in communication with at least one of the one or more separation chambers. The working fluid return line is configured to be connected to the HVACR system. The purge system further includes a second pump. The second pump is in communication with at least one of the one or more separation chambers by way of a return line valve and the working fluid return line.

In an embodiment, the purge gas inlet is in fluid communication with the condenser.

In an embodiment, the return line is in fluid communication with the evaporator.

In an embodiment, the working fluid circuit circulates the one or more working fluids at pressures less than atmospheric pressure.

In an embodiment, the one or more working fluids are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof.

In an embodiment, a method of purging a heating, ventilation, air conditioning, and refrigeration (HVACR) system includes receiving a mixture of one or more working fluids and one or more non-condensable gases in a separation chamber, the separation chamber containing an adsorbent material and adsorbing at least some of the one or more working fluids to the adsorbent material. After adsorbing at least some of the one or more working fluids to the adsorbent material, the method includes exhausting the mixture through an exhaust port downstream of the separation chamber and in fluid communication with the separation chamber. The method further includes recovering the at least some of the one or more working fluids adsorbed by the adsorbent material by closing a first valve upstream of the separation chamber, closing a second valve between the separation chamber and the exhaust port, and operating a recovery pump to reduce a pressure within the separation chamber. The recovery pump is in fluid communication with the separation chamber and with a return line, the return line in fluid communication with the HVACR system.

In an embodiment, the one or more working fluids are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof.

In an embodiment, a temperature of the mixture is below approximately 100° C throughout the method and a temperature during the regeneration of the adsorbent is below approximately 100° C throughout the recovering of the at least some of the one or more working fluids.

In an embodiment, the method further includes determining a change in temperature between two or more points within the separation chamber and determining when to recover the some of the at least one or more working fluids based on the change in temperature between the two or more points within the separation chamber.

In an embodiment, the method further includes determining a mass of the separation chamber and determining, based on the mass of the separation chamber, when to recover the some of the at least one or more working fluids based on the change in temperature between the two or more points within the separation chamber.

In an embodiment, the method further includes measuring a pressure within the separation chamber when recovering the at least some of the at least one or more working fluids, and based on the pressure, ending the recovering of the at least one or more working fluids.

In an embodiment, the method further includes pressurizing the separation chamber with the mixture using a pump located upstream of the separation chamber.

In an embodiment, a purge system for a heating, ventilation, air conditioning, and refrigeration (HVACR) system includes a purge gas inlet configured to receive a mixture including one or more working fluids and one or more non-condensable gases, a pump, and one or more separation chambers. Each separation chamber includes a membrane, the membrane dividing the separation chamber into a first side and a second side. The purge gas inlet is in fluid communication with the first side of the separation chamber. The membrane is configured to reject the one or more non-condensable gases. The purge system includes an exhaust port configured to release gas into an ambient environment. The exhaust port is in fluid communication with the first sides of the one or more separation chambers. The purge system further includes a working fluid return line in communication with at least one of the second sides of the one or more separation chambers, the working fluid return line configured to be connected to the HVACR system.

In an embodiment, the membrane in each of the one or more separation chambers is configured to reject the one or more non-condensable gases based on the solubility of the one or more non-condensable gases. In an embodiment, the membrane in each of the one or more separation chambers is coiled such that it has a cross-section having a spiral shape.

In an embodiment, the pump is between the purge gas inlet and the one or more separation chambers. In an embodiment, the pump is between the one or more separation chambers and the exhaust port, and the purge system further comprises a second pump, the second pump located along the working fluid return line.

In an embodiment, the purge system further includes a first pressure sensor between the purge gas inlet and the one or more separation chambers, and a second pressure sensor between the one or more separation chambers and the exhaust port.

In an embodiment, the purge system further includes a discharge valve configured to control flow out of the exhaust port, and a controller. The controller is configured to receive a first pressure from the first pressure sensor, receive a second pressure from the second pressure sensor, determine a pressure relationship, and determine operation of the discharge valve based on the pressure relationship.

In an embodiment, the purge system further includes a first temperature sensor between the purge gas inlet and the one or more separation chambers, and a second temperature sensor located between the one or more separation chambers and the exhaust port. The controller is further configured to determine a temperature adjustment based on one or more of a first temperature from the first temperature sensor and a second temperature from the second temperature sensor, and adjust one or more of the first pressure, the second pressure, or the pressure relationship based on the temperature adjustment. In an embodiment, the pressure relationship is a ratio between the first pressure and the second pressure. In an embodiment, determining operation of the discharge valve comprises comparing the pressure relationship to a threshold value.

In an embodiment, a heating, ventilation, air conditioning, and refrigeration (HVACR) system includes a refrigeration circuit, comprising a compressor, a condenser, an expander, and an evaporator, the refrigeration circuit configured to circulate one or more working fluids and a purge system. The purge system includes a purge gas inlet configured to receive a mixture including the one or more working fluids and one or more non-condensable gases from the refrigeration circuit, a pump, and one or more separation chambers. Each separation chamber includes a membrane, the membrane dividing the separation chamber into a first side and a second side. The purge gas inlet is in fluid communication with the first side of the separation chamber. The membrane is configured to reject the one or more non-condensable gases. The purge system further includes an exhaust port configured to release gas into an ambient environment. The exhaust port is in fluid communication with the first sides of the one or more separation chambers. The purge system further includes a working fluid return line in communication with at least one of the second sides of the one or more separation chambers. The working fluid return line is configured to be connected to the refrigeration circuit.

In an embodiment, the purge gas inlet is in fluid communication with the condenser.

In an embodiment, the return line is in fluid communication with the evaporator.

In an embodiment, the working fluid circuit is configured to circulate the one or more working fluids at pressures less than atmospheric pressure.

In an embodiment, the one or more working fluids are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof.

In an embodiment, a method of purging a heating, ventilation, air conditioning, and refrigeration (HVACR) system includes receiving a mixture of one or more working fluids and one or more non-condensable gases in a separation chamber. The separation chamber includes a membrane dividing the separation chamber into a first side and a second side. The mixture is received on the first side of the separation chamber. The method further includes passing at least some of the one or more working fluids through the membrane, from the first side of the separation chamber to the second side of the separation chamber. After passing at least some of the one or more working fluids through the membrane, the method includes exhausting the mixture through an exhaust port downstream of the separation chamber and in fluid communication with the first side of the separation chamber. The method further includes providing fluid communication between the second side of the separation chamber and the HVACR system to return at least some of the one or more working fluids to the HVACR system.

In an embodiment, the one or more working fluids are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof.

In an embodiment, a temperature of the mixture is below approximately 100° C throughout the method and a temperature of the one or more working fluids passed through the membrane is below approximately 100° C throughout the method.

In an embodiment, the method further includes determining a first pressure upstream of the separation chamber, determining a second pressure downstream of the separation chamber, and wherein exhausting the mixture comprises opening a discharge valve controlling flow through the exhaust port when a difference between the first pressure and the second pressure exceeds a threshold value.

In an embodiment, the method further includes pressurizing the separation chamber with the mixture using a pump located upstream of the separation chamber.

### Drawings

Figure 1 shows a heating, ventilation, air conditioning and refrigeration (HVACR) circuit including a purge according to an embodiment.
Figure 2 shows an adsorbent purge system according to an embodiment.
Figure 3 shows an adsorbent purge system including a pusher pump according to an embodiment.
Figure 4 shows a membrane purge system according to an embodiment.
Figure 5 shows a membrane purge system including a pusher pump according to an embodiment.
Figure 6 shows a hybrid purge system including a membrane and an adsorbent according to an embodiment.
Figure 7 shows a flowchart of a method for controlling a purge system according to an embodiment.

### Detailed Description

This disclosure is directed to purge systems for use with chiller systems, particularly purge systems recovering working fluid using an adsorbent and/or a membrane.

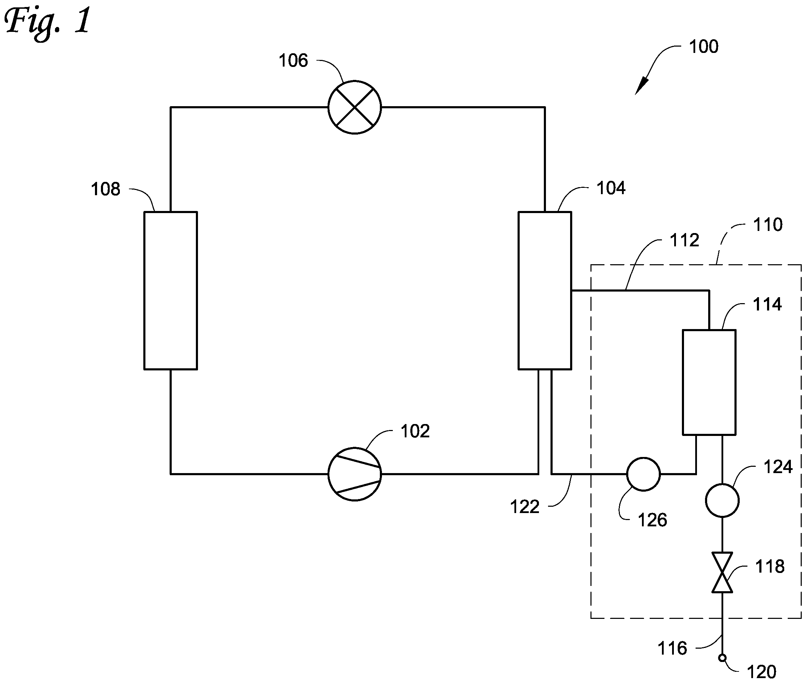

Figure 1 shows a heating, ventilation, air conditioning and refrigeration (HVACR) circuit including a purge according to an embodiment. HVACR circuit 100 includes compressor 102, condenser 104, expander 106, and evaporator 108 connected to one another in series. Purge system 110 is connected to condenser 104, where it can draw off a flow of purge gas.

HVACR circuit 100 can be, for example, a chiller in a chilled-water HVACR system, or any other suitable refrigeration circuit in need of purging non-condensables from a working fluid used therein. The working fluid can be any suitable fluid for use in an HVACR circuit. The working fluid can include condensable fluids. The working fluid circulated in HVACR circuit 100 can include a low global warming potential (low-GWP) refrigerant. The working fluid circulated in HVACR circuit 100 can include, as non-limiting examples, one or more of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof, or the like. In an embodiment, HVACR circuit 100 can be a low-pressure HVACR circuit, where the pressure of the working fluid is less than atmospheric pressure in at least a portion of the HAVCR circuit 100 during operation. In an embodiment, working fluid at condenser 104 can be at a pressure that is above atmospheric pressure.

Compressor 102 is a compressor configured to compress the fluid within HVACR circuit 100 from a relatively lower pressure at a suction of the compressor to a relatively higher pressure at discharge from the compressor 102. Compressor 102 can be any suitable type of compressor for compressing a working fluid in an HVACR circuit. The compressor 102 can be, as non-limiting examples, a screw compressor, a scroll compressor, a centrifugal compressor, or the like. In an embodiment, the compressor 102 is a screw compressor.

Condenser 104 can be a heat exchanger that receives compressed working fluid from compressor 102 and allows the compressed working fluid to release heat, for example to an ambient environment. In an embodiment, condenser 104 can be where working fluid is provided to a purge system 110. In an embodiment, condenser 104 can receive working fluid that has been recovered from purge system 110.

Expander 106 reduces the pressure of a fluid to expand the fluid. Expander 106 can be any suitable structure for expansion of a fluid, such as an expansion valve, one or more expansion orifices, or the like.

Evaporator 108 can be a heat exchanger receiving the working fluid after it has been expanded by expander 106. At evaporator 108, the working fluid absorbs heat, for example to cool a process fluid. In an embodiment, the process fluid is water where HVACR circuit 100 is a water chiller for an HVACR system. In an embodiment, evaporator 108 can receive working fluid recovered by purge system 100. It will be appreciated that other process fluids may be cooled by the working fluid, such as but not limited to for example, glycol, air, water, mixtures thereof, or the like.

Purge system 110 includes a fluid line 112 to convey the flow of purge gas from the condenser 104 to separation chamber 114. Separation chamber 114 separates the flow of purge gas into a non-condensable flow, conveyed by exhaust line 116 to exhaust valve 118, with exhaust valve 118 controlling flow through exhaust port 120, and a working fluid return flow, returned to the HVACR circuit 100 through return line 122. Pumps 124, 126 can be included in the exhaust line 116 and the return line 122, respectively, to drive the respective flows.

Separation chamber 114 is a chamber including a separator configured to separate contaminants from the working fluid. The contaminants can include, for example, non-condensable gases incompatible with the refrigeration cycle of HVACR circuit 100. The contaminants can include, for example, air, its component gases, or the like. The separation chamber 114 can separate the contaminants and the working fluid without the addition of heat from an external source. In an embodiment, the process of separating the contaminants from the working fluid occurs at less than 150° C. In an embodiment, the process of separating the contaminants from the working fluid occurs at less than 100° C.

In an embodiment, the separator in separation chamber 114 can include a membrane configured to selectively pass one of the working fluid or the contaminants and reject the other of the working fluid or the contaminants. The membrane can divide the separation chamber 114 into a working fluid side and a contaminant side, based on what is passed through the membrane and where the flow is received from fluid line 112. In an embodiment, the membrane can pass or reject compounds based on the size of molecules. In an embodiment, the membrane can pass or reject compounds based on the solubility of the compounds. In an embodiment, the membrane passes the working fluid and rejects contaminants based on solubility. In this embodiment, the fluid line 112 and the exhaust line 116 are in communication with one another on the contaminant side of the membrane, and the return line 122 is in communication with the working fluid side of the membrane. In an embodiment, the working fluid side is an opposite side of the membrane from the contaminant side.

In an embodiment, the separator in separation chamber 114 includes an adsorbent material configured to have the working fluid adsorb to the surface under predetermined pressure conditions. The adsorbent material can be, for example, particles of silica such as beads or the like. In an embodiment where separation chamber 114 includes an adsorbent material, one or more valves can be provided to control flow between the separation chamber 114 and each of fluid line 112, exhaust line 116, and return line 122 such that either only fluid line 112 and exhaust line 116 are in communication with separation chamber 114 during purge operations, or only return line 122 is in communication with the separation chamber 114 during adsorbent regeneration operations.

Pump 124 can be included along exhaust line 116, between the separation chamber 114 and exhaust valve 118. Exhaust valve 118 controls flow through exhaust line 116 to exhaust port 120. Exhaust valve 118 can be any suitable controllable valve that can be varied between at least a closed position and an open position. In an embodiment, exhaust valve 118 can control a quantity of flow passing through. Fluid passing through exhaust valve 118 can then continue to exhaust port 120 where it leaves purge system 110 to enter an ambient environment. The fluid passing out of exhaust port 120 can be primarily contaminant. Exhaust valve 118 can be controlled, for example, based on an estimate of contaminant concentration or working fluid concentration in the exhaust line 116.

Pump 126 is included along return line 122. In an embodiment where separation chamber 114 includes a membrane, pump 126 can draw working fluid into and through return line 122. In an embodiment where separation chamber 114 includes an adsorbent material, pump 126 can be used in a regeneration operation to draw fluid out of separation chamber 114 when only return line 122 is in communication with the separation chamber 114 to lower pressure within the separation chamber 114 and release adsorbed working fluid from the adsorbent material to regenerate the adsorbent and recapture the working fluid. The return line 122 can convey working fluid recovered from separation chamber 114 to the HVACR circuit 100, for example to condenser 104 as shown or to evaporator 108.

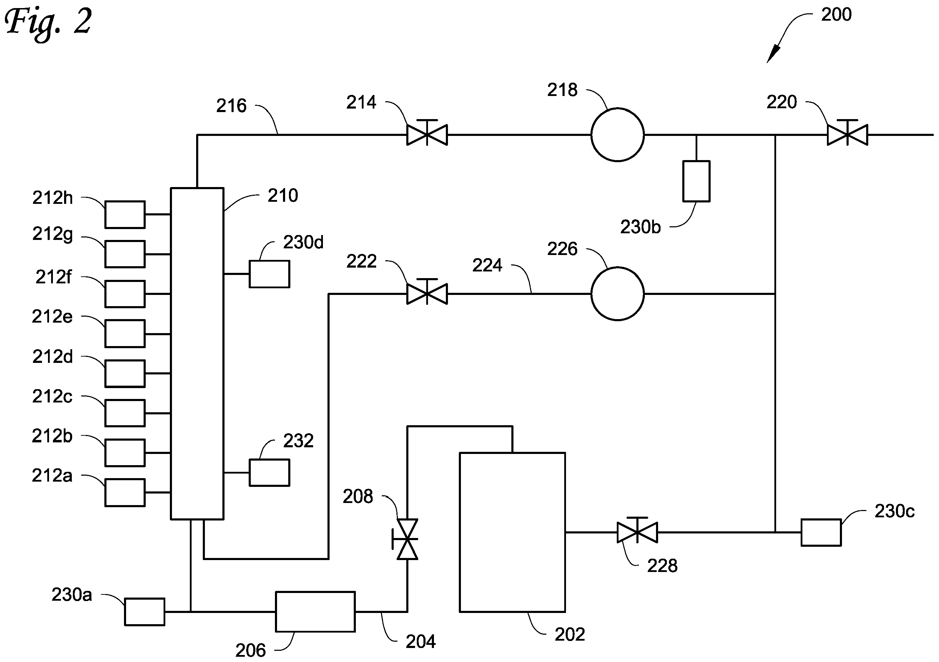

Figure 2 shows an adsorbent purge system according to an embodiment. Purge system 200 is connected to a condenser 202 of an HVACR circuit. Intake line 204 conveys fluid from the condenser 202. Filter/dryer 206 can be included along intake line 204. Intake line valve 208 can control flow through the intake line 204 into adsorbent tank 210. A plurality of temperature sensors 212a-212h can be included to measure temperatures at different locations in the adsorbent tank 210. Exhaust valve 214 controls from adsorbent tank 210 to exhaust line 216. Exhaust line 216 can convey fluid exiting the adsorbent tank 210 through exhaust valve 214. Exhaust pump 218 can be disposed along the exhaust line 216 to draw the fluid through the exhaust line 216. Discharge valve 220 can be disposed at an end of exhaust line 216 to allow discharge of fluid within exhaust line 216 to the ambient environment. Regeneration valve 222 controls flow from the adsorbent tank 210 to return line 224. Return pump 226 is located along return line 224. Return valve 228 controls the flow from return line 224 to condenser 202.

Condenser 202 is a condenser of an HVACR circuit. Condenser 202 can be, for example, condenser 104 of HVACR circuit 100 described above and shown in Figure 1. The condenser 202 includes a port in communication with the intake line 204, such that a fluid in condenser 202 can enter purge system 200.

Intake line 204 is a fluid line configured to convey a mixture of working fluid and contaminant from the condenser 202 to adsorbent tank 210. Intake line 204 can include any suitable fluid line capable of conveying the working fluid at the typical temperature and pressure conditions for an HVACR system including purge system 200, such as tubes, piping, or the like. Intake line 204 can include any suitable material for such fluid lines that has sufficient mechanical properties for systems operation. In an embodiment, the intake line 204 is not reactive with the working fluid or contaminants.

Optionally, a filter and/or dryer 206 can be included along intake line 204. The filter and/or dryer can be used to condition the fluid flow in intake line 204 prior to it entering the adsorbent tank 208 to remove any moisture or particulates that may impair the function of the adsorbent. The filter and/or dryer 206 can be, for example, a moisture filter configured to absorb moisture from the flow through intake line 204.

Intake line valve 208 can be located along intake line 204 or where intake line 204 joins adsorbent tank 210. Intake line valve 208 controls the flow of fluid into adsorbent tank 210. Intake line valve 208 can be any suitable type of valve that can be controlled between an open position allowing flow and a fully closed position prohibiting flow. In an embodiment, intake line valve 208 can further include one or more intermediate positions allowing a restricted flow rate, less than a fully open flow rate, through the intake line valve 208. In an embodiment, intake line valve 208 can be controlled based on an operating mode of the purge system 200, either a purge operation where intake line valve 208 allows at least some flow or a regeneration operation where the intake line valve 208 completely obstructs flow.

Adsorbent tank 210 is a structure that contains an adsorbent material. The adsorbent material can be a material to which the working fluid can adsorb, but that contaminants such as non-condensable atmospheric gases will not adsorb to. The adsorbent material can be provided as powder, beads, or any other suitable structure of particle to pass fluid through such that the working fluid can adsorb to the adsorbent material. The adsorbent material can be, for example, a carbon- or silicon- based adsorbent material. The adsorbent material can be selected such that the adsorption and regeneration processes each can be performed at temperatures below approximately 150° C. The adsorbent material can be selected such that the adsorption and regeneration processes each can be performed at temperatures below approximately 100° C. The adsorbent material can be selected such that adsorption and release of the working fluid can be mediated by pressure or vacuum without requiring additional heating to be provided to the adsorbent material. The adsorbent tank 210 can be generally cylindrical in shape. An axis of the adsorbent tank 210 can extend in a vertical direction. In an embodiment where the adsorbent tank 210 extends in the vertical direction, the intake line 204 can provide flow into adsorbent tank 210 at a bottom of the adsorbent tank 210, and the exhaust line 216 can extend from a top of the adsorbent tank 210. The adsorbent tank 210 can be a vertical separation column. In an embodiment, a height to width ratio of the vertical separation column can be selected to improve the separation performance of adsorbent tank 210.

The adsorbent in adsorbent tank 210 can be selected based on the compounds to recover from the mixture of working fluid and contaminants received at intake line 204. As non-limiting examples, the compounds to recover can include one or more of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof, or the like.

Temperature sensors 212a-212h can be distributed along adsorbent tank 210. In an embodiment, adsorbent tank 210 has a major axis in a vertical direction, and the temperature sensors 212a-212h are distributed vertically at different heights with respect to the adsorbent tank 210. The temperature sensors 212a-212h can report temperatures at these different heights, which can in turn be used to determine adsorption of working fluid to the adsorbent material based on the heat of adsorption, for example to determine when to regenerate the sorbent or when fluid in exhaust line 216 can be exhausted through discharge valve 220.

Exhaust valve 214 is a valve configured to permit or prevent flow between adsorbent chamber 210 and exhaust line 216 or within exhaust line 216. Exhaust valve 214 can be any suitable type of valve that can be controlled between an open position allowing flow and a fully closed position prohibiting flow. In an embodiment, exhaust valve 214 can further include one or more intermediate positions allowing a restricted flow rate, less than a fully open flow rate, through the exhaust valve 214. In an embodiment, exhaust valve 214 can be controlled based on an operating mode of the purge system 200, either a purge operation where exhaust valve 214 allows at least some flow or a regeneration operation where the exhaust valve 214 completely obstructs flow.

Exhaust line 216 is a line from adsorbent tank 210 or exhaust valve 214 to discharge valve 220. Exhaust line 216 can include any suitable fluid line capable of conveying the working fluid at the typical temperature and pressure conditions for the purge system 202, such as tubes, piping, or the like. Exhaust line 216 can be include any suitable material for such fluid lines that has sufficient mechanical properties for systems operation. In an embodiment, the exhaust line is not reactive with the working fluid or contaminants.

Exhaust pump 218 is a pump located along exhaust line 216. Exhaust pump 218 can be downstream of the exhaust valve 214. Exhaust pump 218 can be any suitable pump configured to draw in fluid and increase its velocity. Exhaust pump 218 draws in fluid in exhaust line 216 which is in fluid communication with the adsorbent tank 210 during a purge mode of operation, thus drawing fluid from the adsorbent tank 210 into exhaust line 216. Exhaust pump 218 exhausts the fluid towards discharge valve 220.

Discharge valve 220 is a valve configured to control fluid communication between exhaust line 216 and an environment to which the contaminants are released. Since the contaminants are typically air or its constituent molecules, they can typically be discharged into an ambient environment of the purge system 200. The discharge valve 220 can be any suitable type of valve that can be controlled between an open position allowing flow and a fully closed position prohibiting flow. In an embodiment, discharge valve 220 can further include one or more intermediate positions allowing a restricted flow rate, less than a fully open flow rate, through the discharge valve 220. In an embodiment, discharge valve 220 can be opened or closed based on a concentration of contaminant in exhaust line 216. The concentration of contaminant can be determined, for example, based on pressure differentials in purge system 200. In an embodiment, discharge valve 220 opens directly to the ambient environment. In an embodiment, discharge valve 220 connects exhaust line 216 to another fluid line (not shown) conveying the contaminants to the ambient environment.

Regeneration valve 222 is a valve controlling fluid communication between the adsorbent chamber 210 and some or all of return line 224. Regeneration valve 222 can be located where return line 224 joins the adsorbent chamber 210, or along return line 224 upstream of return pump 226. Regeneration valve 222 can be any suitable type of valve that can be controlled between an open position allowing flow and a fully closed position prohibiting flow. In an embodiment, regeneration valve 222 can further include one or more intermediate positions allowing a restricted flow rate, less than a fully open flow rate, through the regeneration valve 222. In an embodiment, regeneration valve 222 can be controlled based on an operating mode of the purge system 200, either a purge operation where regeneration valve 222 completely obstructs flow, or a regeneration operation where the regeneration valve 222 allows at least some flow.

Return line 224 is configured to convey fluid from adsorbent chamber 210 to condenser 202. Return line 224 can include any suitable fluid line capable of conveying the working fluid at the typical temperature and pressure conditions for the purge system 202, such as tubes, piping, or the like. Return line 224 can be include any suitable material for such fluid lines that has sufficient mechanical properties for systems operation. In an embodiment, the return line 224 is not reactive with the working fluid.

Return pump 226 is a pump disposed along return line 224, downstream of regeneration valve 222. Return pump 226 can be any suitable pump for drawing in and expelling the working fluid. Return pump 226 can be a pump capable of producing a vacuum within adsorbent tank 210 when only regeneration valve 222 is open among the valves allowing fluid communication with the adsorbent tank 210.

Return valve 228 is a valve controlling flow through return line 224 back to the HVACR system including purge system 200. Return valve 228 can control flow from purge system 200 into the condenser 202 of the HVACR system. Return valve 228 can be along return line 224 downstream of return pump 226 or where return line 224 joins the HVACR system, for example at condenser 202. Return valve 228 can be any suitable type of valve that can be controlled between an open position allowing flow and a fully closed position prohibiting flow. In an embodiment, return valve 228 can further include one or more intermediate positions allowing a restricted flow rate, less than a fully open flow rate, through the return valve 228. In an embodiment, return valve 228 can be controlled based on an operating mode of the purge system 200, either a purge operation where return valve 228 completely obstructs flow, or a regeneration operation where the return valve 228 allows at least some flow.

In place of or in addition to temperature sensors 212a-212h, pressure sensors 230a-230c can optionally be included. Pressure sensors 230a-230c can be located, respectively, on intake line 204, exhaust line 216 and/or return line 224 to measure a pressure within each line. In an embodiment, a weight of the adsorbent tank 210 or the adsorbent contained within can be monitored, and when the weight of the tank reaches or exceeds a threshold, the regeneration operation can be initiated. In an embodiment, the weight of the adsorbent tank can be used to determine when to end the regeneration process, for example when the weight falls below a threshold value for ending the regeneration. The weight of the adsorbent tank 210 can be measured by a weight sensor 232. In an embodiment, a change in temperature across the temperature sensors 212a-212h can be used to determine, based on the heat of adsorption, when to carry out a regeneration operation for the purge system 200. In an embodiment, a pressure within the adsorbent tank 210 can be used to determine when to end a regeneration operation, for example when falling below a threshold value due to the slowing or stopping of release of previously adsorbed working fluid. In an embodiment, pressure sensor 230d can be included, measuring a pressure within adsorbent tank 210. The pressure measured by pressure sensor 230d can be used to control the regeneration operation, for example by having the regeneration operation ended when the pressure measured by a pressure sensor 230d falls below a threshold, for example as determined by a controller receiving the pressure measurement from pressure sensor 230d.

When in a purge mode, intake valve 208 and exhaust valve 214 both allow flow through them while return valve 228 prohibits flow. In this arrangement of valves, fluid from condenser 202 passes through intake line 204 and intake valve 208 to enter adsorption chamber 210, where the working fluid adsorbs to the adsorbent material. As the fluid from intake line 204 proceeds through the adsorption chamber 210, the proportion of the working fluid decreases as it adsorbs to the adsorbent material, and the contaminant accordingly becomes more concentrated. In the purge mode, fluid in the adsorption chamber 210 cannot pass through regeneration valve 222 and thus cannot flow through at least some of return line 224 or to return pump 226 and return valve 228. Accordingly, all fluid leaving the adsorption chamber 210 flows through exhaust valve 214, into exhaust line 216. In an embodiment, the action of pump 218 draws the fluid from adsorption chamber 210 into exhaust line 216. The fluid in exhaust line 216 can accumulate there until the discharge valve 220 is opened, allowing the fluid in exhaust line 216 to be discharged to the ambient environment. Discharge valve 220 can be controlled based on, for example, changes in the weight of adsorbent tank 210 and/or pressure differences observed within adsorbent tank 210, for example to open discharge valve 220 only when one or both of those variables exceed threshold values for release. In an embodiment, discharge valve 220 is open only during select periods of the purge mode and/or during portions of the regeneration mode described below. In an embodiment, discharge valve 220 is open only during the purge mode described below.

Purge system 200 can also operate in a regeneration mode, for example, when the adsorbent is at or near saturation, its affinity for the working fluid is decreased, and/or when working fluid is to be returned to the HVACR system including purge system 200. In an embodiment, the regeneration mode can be selected based on mass of the adsorbent tank 210, temperature differences observed within the adsorbent tank 210, a schedule of times, or based on flow through the purge system 200 over time. When in the regeneration mode, intake valve 208 and exhaust valve 214 are closed while regeneration valve 222 is the only valve controlling flow to and from adsorption chamber 210 that is open. Since regeneration valve 222 is the only valve that is open, pressure within adsorption chamber 210 is reduced as fluid is drawn through return line 224 by return pump 226. As the pressure in adsorption chamber 210 decreases, the working fluid adsorbed to the adsorbent material is released and then is drawn through the regeneration valve 222 into return line 224. The working fluid can accumulate in return line 224, and be returned to the HVACR system when return valve 228 is opened.

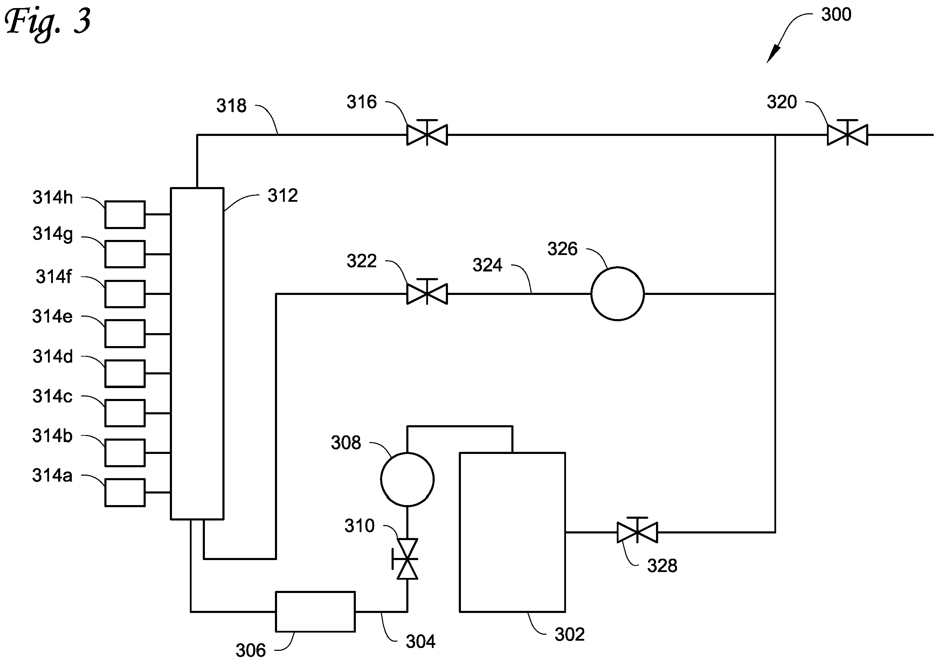

Figure 3 shows an adsorbent purge system including a pusher pump according to an embodiment. Purge system 300 is connected to a condenser 302 of an HVACR circuit. Intake line 304 conveys fluid from the condenser 302. Filter/dryer 306 can be included along intake line 304. Pusher pump 308 is located along intake line 304, upstream of adsorbent tank 312. Intake line valve 310 can control flow through the intake line 304 into adsorbent tank 312. A plurality of temperature sensors 314a-314h can included to measure temperatures at different locations in the adsorbent tank 312. Exhaust valve 316 controls from adsorbent tank 312 to exhaust line 318. Exhaust line 318 can convey fluid exiting the adsorbent tank 312 through exhaust valve 316. Discharge valve 320 can be disposed at an end of exhaust line 318 to allow discharge of fluid within exhaust line 318 to the ambient environment. Regeneration valve 322 controls flow from the adsorbent tank 312 to return line 324. Return pump 326 is located along return line 324. Return valve 328 controls the flow from return line 324 to condenser 302.

Condenser 302 and filter/dryer 306 can be the same as condenser 202 and filter/dryer 206 described above and shown in Figure 2. Intake line 304 can be the same as intake line 204 described and shown above, except that pusher pump 308 is also located along the intake line 304. The filter and/or dryer 306 can be, for example, a moisture filter configured to absorb moisture from the flow through intake line 304.

Pusher pump 308 is a pump disposed along intake line 304. Pusher pump 308 can be any suitable pump for driving flow through intake line 304. Fluid discharged from pusher pump 308 can increase pressure within adsorbent tank 312. The increased pressure within adsorbent tank 312 can increase the extent of adsorption of the working fluid to the adsorbent material contained within adsorbent tank 312. In an embodiment, the velocity imparted to the fluid by pusher pump 308 can carry fluid to discharge valve 320 without requiring further pumps along the exhaust line 318.

Intake line valve 310, adsorbent tank 312, temperature sensors 314a-314f, and exhaust valve 316 can each be, respectively, the corresponding intake line valve 208, adsorbent tank 310, temperature sensors 212a-212f, and exhaust valve 214 as shown in Figure 2 and described above.

Exhaust line 318 can be similar to exhaust line 216 shown in Figure 2 and described above except that no exhaust pump 218 is required in the purge system 300 including a pusher pump 308 as shown in Figure 3. In an embodiment, exhaust line 318 does not include a pump. In an embodiment, a pump can optionally be included on the exhaust line 318. Exhaust valve 320 can be the same as the exhaust valve 218 shown in Figure 2 and described above.

Regeneration valve 322, return line 324, and return valve 328 can each, respectively, be regeneration valve 222, return line 224, and return valve 228 as shown in Figure 2 and described above. Purge system 300 includes a return line pump 326, which can be the same as the return line pump 226 shown in Figure 2 and described above. The return line pump 326 can be used for regeneration operations in purge system 300, when the intake line valve 310 is closed, separating adsorbent tank 312 and return line 324 from pusher pump 308. The purge and regeneration operations of purge system 300 can correspond to such operations for the purge system 200 as described above.

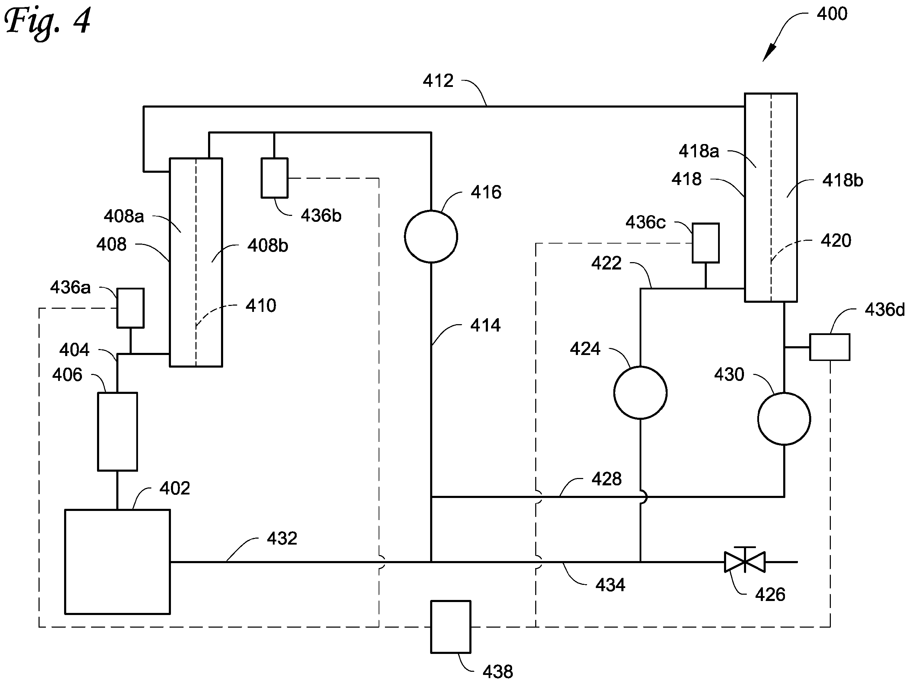

Figure 4 shows a membrane purge system according to an embodiment. Membrane purge system 400 received fluid from a condenser 402 of an HVACR system. The fluid is received in intake line 404. Optionally, a filter and/or a dryer 406 can be included along intake line 404. A first stage membrane separation chamber 408 receives fluid from intake line 404. First stage membrane separation chamber 408 includes a first side 408a and a second side 408b, the sides separated by first separation membrane 410. Interstage line 412 extends from first side 408a to second stage membrane separation chamber 418. First stage return line 414 extends from second side 408b. First stage return pump 416 is included along first stage return line 414. Second stage membrane separation chamber 418 includes a first side 418a and a second side 418b, divided by second separation membrane 420. Exhaust line 422 extends from first side 418a. Exhaust line 422 includes exhaust line pump 424. Exhaust line 422 continues to exhaust valve 426, which can release fluid to an ambient environment. Second stage return line 428 extends from second side 418b. Second stage return line pump 430 is included on second stage return line 428. First stage return line 414 and second stage return line 428 join to form combined return line 432. In an embodiment, exhaust line 422 can also be joined to combined return line 432 by way of releasables return line 434.

Condenser 402 can be, for example, condenser 104 of HVACR circuit 100 described above and shown in Figure 1. The condenser 402 includes a port in communication with the intake line 404, such that a fluid in condenser 402 can enter purge system 400.

Intake line 404 is a fluid line configured to direct fluid from condenser 402 to first stage membrane separation chamber 408. Optionally, a filter and/or dryer 406 can be included along the intake line 404. The filter and/or dryer can be used to condition the fluid flow in intake line 404 prior to it entering the first stage membrane separation chamber 408, for example to remove moisture and/or particulate matter that may damage or reduce the effectiveness of first and second separation membranes 410, 420. The filter and/or dryer 406 can be, for example, a moisture filter configured to absorb moisture from the flow through intake line 404.

First stage membrane separation chamber 408 is a chamber divided into a first side 408a and a second side 408b by the first separation membrane 410. The first side 408a can be in communication with the intake line 404 and one of the interstage line 412 or the first stage return line 414, depending on whether the first separation membrane 410 passes or rejects the contaminants. In the embodiment shown in Figure 4, the first separation membrane 410 allows the working fluid to pass while rejecting the contaminants, and thus the interstage line 412 is connected to the same side of the first stage membrane separation chamber 408, first side 408a, as the intake line 404. In an embodiment, where the first separation membrane 410 passes the contaminant and rejects the working fluid, intake line 404 and first stage return line 414 can be connected to the first side 408a, and the interstage line 412 can be connected to the second side 408b. First side 408a and second side 408b are defined with respect to the first separation membrane 410, and can have respective geometries corresponding to how that membrane divides the chamber based on its geometry and position within the chamber.

First separation membrane 410 is a selectively permeable membrane configured to pass one of the working fluid or the contaminant and to reject the other. First separation membrane 410 can have any suitable size, shape, and position within the first stage membrane separation chamber 408 that divides the chamber into first side 408a and second side 408b. In an embodiment, the first separation membrane forms a plane dividing first side 408a from second side 408b. In an embodiment, the first separation membrane can have a shape configured to increase a surface area of the membrane, such as folds, pleating, rolling, or any other suitable shape so long as it such a shape divides discrete first and second sides 408 a,b, of the first stage membrane separation chamber 408. The first separation membrane 410 can be selective based on particle size or particle solubility. In an embodiment, first separation membrane 410 is selective based on solubility. In an embodiment, first separation membrane 410 is configured to pass working fluid and reject contaminant based on solubility. In an embodiment, first separation membrane 410 is configured to pass at least one of the following based on solubility: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof, or the like.

Interstage line 412 is a fluid line configured to convey fluid containing contaminant and working fluid from the first stage membrane separation chamber 408 to the second stage membrane separation chamber 418. The fluid in interstage line 412 typically includes a higher proportion of contaminant compared to the fluid in intake line 404. Interstage line 412 can be connected to one of first side 408a or second side 408b of first stage membrane separation chamber 408 based on whether first separation membrane 410 passes or rejects contaminants, with interstage line 412 being on the side having fluid including the contaminants. In the embodiment shown in Figure 4, interstage line 412 is in communication with first side 418a of second stage membrane separation chamber 418.

First stage return line 414 is a fluid line configured to convey fluid from the first stage membrane separation chamber 410 to be returned to the HVACR system including purge system 400. The fluid conveyed by first stage return line 414 typically includes a higher proportion of working fluid compared to the fluid in intake line 404.

First stage return pump 416 is located along first stage return line 414. First stage return pump 416 can be any suitable pump for drawing in and expelling a mixture primarily composed of the working fluid to cause the fluid to move along first stage return line 414. In an embodiment where the first separation membrane 410 passes the working fluid, the action of first stage return pump can reduce pressure on the second side 408b of first membrane separation chamber 408 such that the working fluid is drawn through the first separation membrane 410 and then into first stage return line 414.

Second stage membrane separation chamber 418 is a chamber divided into a first side 418a and a second side 418b by the second separation membrane 420. The first side 418a can be in communication with the interstage line 412 and one of the exhaust line 422 or the second stage return line 428, depending on whether the second separation membrane 420 passes or rejects the contaminants. In the embodiment shown in Figure 4, the second separation membrane 420 allows the working fluid to pass while rejecting the contaminants, and thus the exhaust line 422 is connected to the same side of the second stage membrane separation chamber 418, first side 418a, as the interstage line 412. In an embodiment where the first separation membrane 420 passes the contaminant and rejects the working fluid, interstage line 412 and second stage return line 428 can be connected to the first side 418a, and the exhaust line 422 can be connected to the second side 418b. First side 418a and second side 418b are defined with respect to the second separation membrane 420, and can have respective geometries corresponding to how that membrane divides the chamber based on its geometry and position within the chamber.

Second separation membrane 420 is a selectively permeable separation membrane dividing second stage membrane separation chamber 418 into first side 418a and second side 418b. Second separation membrane 420 can include the same membrane material as first separation membrane 410 or a different membrane material from first separation membrane 410. In an embodiment, the first separation membrane 410 can have a surface area that is greater than the surface area of the second separation membrane 420. Second separation membrane 420 can have any suitable size, shape, and position within the second stage membrane separation chamber 418 that divides the chamber into first side 418a and second side 418b. In an embodiment, the second separation membrane forms a plane dividing first side 418a from second side 418b. In an embodiment, the second separation membrane can have a shape configured to increase a surface area of the membrane, such as folds, pleating, rolling, or any other suitable shape so long as it such a shape divides discrete first and second sides 418 a,b, of the second stage membrane separation chamber 418. The second separation membrane 420 can be selective based on particle size or particle solubility. In an embodiment, second separation membrane 420 is selective based on solubility. In an embodiment, second separation membrane 420 is configured to pass working fluid and reject contaminant based on solubility. In an embodiment, second separation membrane 420 is configured to pass at least one of the following based on solubility: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof, and the like.

Exhaust line 422 is a fluid line configured to convey fluid from the second stage membrane separation chamber 418 to exhaust valve 426. Exhaust line 422 is connected to second stage separation chamber 418 on the side having a higher concentration of the contaminants. In an embodiment where the second separation membrane 420 passes the contaminants and rejects the working fluid, the exhaust line 422 is on a second side 418b of the second membrane separation chamber 418 from the interstage line 412 such that the contaminants passing the second separation membrane are received at the exhaust line 422. In an embodiment where the second separation membrane 420 rejects the contaminants and passes the working fluid, the exhaust line is connected to the second stage membrane separation chamber on a first side 418a of the second membrane separation chamber 418, with exhaust line 422 receiving fluid having an elevated concentration of contaminant compared to the fluid from interstage line 412 due to the working fluid passing through the second separation membrane 420.

Exhaust line pump 424 is a pump disposed along exhaust line 422 to draw in fluid and expel it, driving the flow in exhaust line 422 towards exhaust valve 426. Exhaust line pump can be any suitable pump for driving the flow through exhaust line 422.

Exhaust valve 426 is a valve is a valve configured to control fluid communication between exhaust line 422 and an environment to which the contaminants are released. Since the contaminants are typically air or its constituent molecules, they can typically be discharged into an ambient environment of the purge system 400. The exhaust valve 426 can be any suitable type of valve that can be controlled between an open position allowing flow and a fully closed position prohibiting flow. In an embodiment, exhaust valve 426 can further include one or more intermediate positions allowing a restricted flow rate, less than a fully open flow rate, through the exhaust valve 426. In an embodiment, exhaust valve 426 can be opened or closed based on a concentration of contaminant in exhaust line 422. The concentration of contaminant can be determined, for example, based on pressure differentials in purge system 400. In an embodiment, exhaust valve 426 opens directly to the ambient environment. In an embodiment, exhaust valve 426 connects exhaust line 422 to another fluid line (not shown) conveying the contaminants to the ambient environment.

Second stage return line 428 is a fluid line configured to convey fluid from the second stage membrane separation chamber 418 to be returned to the HVACR system including purge system 400. The second stage return line 428 can be any suitable fluid line for conveying the fluid. The fluid in second stage return line 428 can be connected to a side 418a,b of second stage membrane separation chamber 418 having a relatively higher concentration of the working fluid due to the action of the second separation membrane 420. In an embodiment where the second separation membrane allows contaminant to pass and rejects the working fluid, the second stage return line 428 can be connected to a first side 418a along with the interstage line 412. In an embodiment where the second separation membrane allows the working fluid to pass and rejects the contaminant, the second stage return line 428 can be connected to a second side 418b, opposite the second separation membrane 420 from interstage line 412.

Second stage return pump 430 is a pump disposed along the second stage return line 428 and configured to drive flow through second stage return line 428 from the second stage membrane separation chamber 418 towards the HVACR system including the purge system 400.

Combined return line 432 is connected to first and second stage return lines 414, 428 and is configured to combine the flows of working fluid to direct the working fluid to its location of reintroduction into the HVACR system including the purge system 400. The combined return line 432 can be joined to any suitable location along the HVACR circuit of the HVACR system where the working fluid can be reintroduced into the circuit. In the embodiment shown in Figure 4, the combined return line 432 returns working fluid to condenser 402. The combined return line could also connect to one or more of an evaporator of the HVACR system or fluid lines conveying fluid between any of the condenser, expander, evaporator, or compressor. In an embodiment, the working fluid can be returned between stages of a multi-stage compressor.

Releasables return line 434 can optionally be included to provide communication between the exhaust line 422 and the combined return line 432, for example to return fluid to the HVACR system if the concentration of working fluid in the fluid in return line 432 is greater than a threshold value permitting release.

One or more pressure sensors 436a-436d can be included along intake line 404, first stage return line 414, exhaust line 422, and second stage return line 428, respectively. The pressure sensors 436a-436d can provide pressure values for fluid in their respective fluid lines. In an embodiment, pressure sensors 436a-436d are connected to a controller 438 such that they can provide their respective pressure measurements to the controller 438. The controller 438 can determine operation of one or more of the valves and/or pumps of the purge system 400 based on differences in the pressure measurements, such as, for example, ratios of pressures in different fluid lines.

While the embodiment shown in Figure 4 includes two membrane separation chambers 408 and 418, it is understood that membrane purge systems according to embodiments can include any number of membrane separation chambers each configured to successively further separate working fluid from a flow including working fluid and contaminants. In an embodiment where one membrane separation chamber is included, the interstage line 412 can instead be an exhaust line leading to exhaust valve 426, with no second stage membrane separation chamber 418 or its corresponding fluid lines. In embodiments where more than two membrane separation chambers are provided, an interstage line such as interstage line 412 can be provided between each membrane separation chamber on the contaminant-containing sides of the respective membranes, connecting the contaminant-containing sides in series up to the exhaust line 422 and exhaust valve 426, while the working fluid sides of the respective membranes can each be in parallel with their own return lines such as first and second stage return lines 414, 428, each including their own pump and joining one another at a combined return line such as combined return line 432.

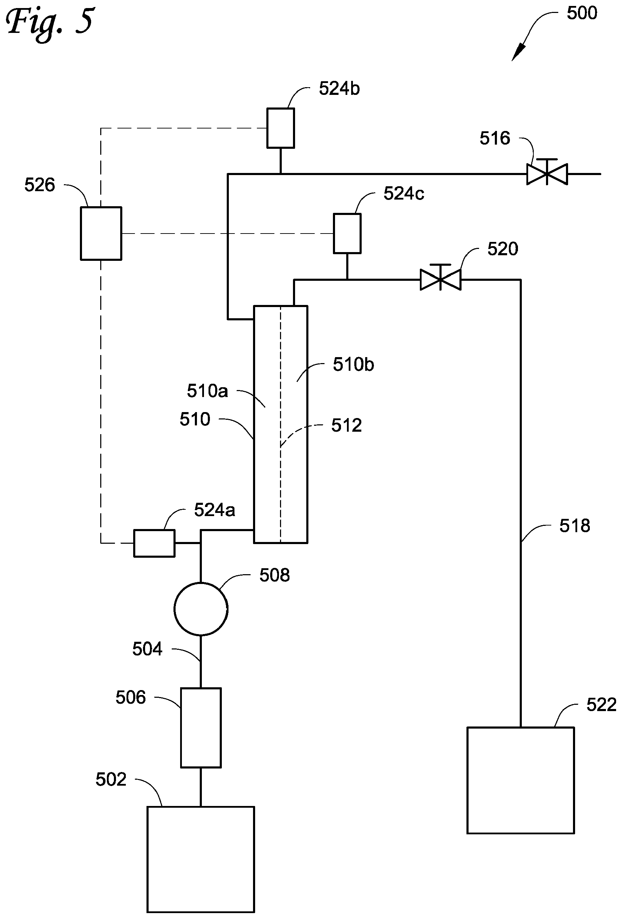

Figure 5 shows a membrane purge system including a pusher pump according to an embodiment. Membrane purge system 500 receives fluid from a condenser 502 of an HVACR system. The fluid is received in an intake line 504. Optionally, a filter and/or a dryer 506 can be included along intake line 504. Pusher pump 508 is disposed along the intake line 504, upstream of membrane separation chamber 510. Membrane separation chamber 510 includes a first side 510a and a second side 510b, divided by membrane 512. Intake line 504 feeds into first side 510a, and exhaust line 514 receives fluid flowing out of first side 510a. Exhaust line 514 extends to exhaust valve 516, which allows flow out of purge system 500 to an ambient environment. Return line 518 receives fluid from second side 510b of the membrane separation chamber 510. Return valve 520 is disposed along the return line 518. Return line 518 conveys the fluid to evaporator 522 of the HVACR system.

Condenser 502 can be, for example, condenser 104 of HVACR circuit 100 described above and shown in Figure 1. The condenser 502 includes a port in communication with the intake line 504, such that a fluid in condenser 502 can enter purge system 500.

Intake line 504 is a fluid line configured to convey fluid from condenser 502 to membrane separation chamber 510. Optionally, a filter and/or dryer 506 can be included along the intake line 504. The filter and/or dryer can be used to condition the fluid flow in intake line 504 prior to it entering membrane separation chamber 510. The filter and/or dryer 506 can be, for example, a moisture filter configured to absorb moisture from the flow through intake line 504.

Pusher pump 508 is a pump located along intake line 504, upstream of the membrane separation chamber 510. Pusher pump 508 is configured to draw in fluid and expel it through intake line 504 or directly into membrane separation chamber 510 with a relatively increased velocity. Pusher pump 508 can be any suitable pump for driving the flow of fluid through intake line 504. In the embodiment shown in Figure 5, pusher pump 508 is the only pump provided in purge system 500. Use of pusher pump 508 can allow the purge system 500 to include only a single pump. In an embodiment, purge system 500 does not include any other pumps along either exhaust line 514 or return line 518. Pusher pump 508 can drive the fluid in intake line 504 such that membrane separation chamber 510 is at an elevated pressure in comparison with the pressure in intake line 504 upstream of pusher pump 508.

Membrane separation chamber 510 is a chamber divided into a first side 510a and a second side 510b by membrane 512. Intake line 504 provides fluid driven by pusher pump 508 into first side 510a. In an embodiment, membrane 512 passes the contaminant, such as non-condensable gases such as atmospheric gases, and prohibits flow of the working fluid. In this embodiment, exhaust line 514 connects to the second side 510b, opposite membrane 512 from intake line 504, and return line 518 is connected to first side 510a. In an embodiment, the membrane 512 passes the working fluid and prohibits flow of the contaminant. In this embodiment, the exhaust line is connected to the first side 510a, and the return line 518 is connected to the second side 510b, on an opposite side of membrane 512 from the intake line 504.

Membrane 512 is a selectively permeable membrane configured to pass one of working fluid or contaminant, and to reject the other. Membrane 512 can have any suitable size, shape, and position within the membrane separation chamber 510 that divides the chamber into first side 510a and second side 510b. In an embodiment, the separation membrane forms a plane dividing first side 510a from second side 510b. In an embodiment, the separation membrane can have a shape configured to increase a surface area of the membrane, such as folds, pleating, rolling, or any other suitable shape so long as it such a shape divides discrete first and second sides 510 a,b, of the membrane separation chamber 510. The separation membrane 512 can be selective based on particle size or particle solubility. In an embodiment, separation membrane 512 is selective based on solubility. In an embodiment, separation membrane 512 is configured to pass working fluid and reject contaminant based on solubility. In an embodiment, separation membrane 512 is configured to pass at least one of the following based on solubility: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof, or the like.

Exhaust line 514 conveys fluid relatively higher in contaminant from the separation chamber 510 to exhaust valve 516. Exhaust line 514 can be connected to either of first or second side 510a,b of separation chamber 510 based on whether the membrane 512 passes or rejects the contaminants. In an embodiment, no pump is included along exhaust line 514. Optionally, an exhaust pump can be included along exhaust line 514.

Exhaust valve 516 controls flow out of exhaust line 514 to an environment for receiving the contaminants. Exhaust valve 516 can be any suitable valve for controlling flow of the fluid in exhaust line 514. In an embodiment, exhaust valve 516 has a closed position obstructing flow completely and an open position permitting flow. In an embodiment, exhaust valve 516 includes one or more intermediate positions partially permitting and partially obstructing flow, or the flow can be continuously varied. In an embodiment, the environment is a tank or other receptacle. In an embodiment, the environment is an ambient environment of purge system 500. In an embodiment, exhaust valve 516 directly outlets to the environment. In an embodiment, exhaust valve 518 allows flow from exhaust line 514 to another line conveying the fluid to the environment. In an embodiment, exhaust valve 516 is operated based on differences in pressure between parts of purge system 500. In an embodiment, exhaust valve 516 is operated based on a model correlating differences in pressure in purge system 500 with a concentration of contaminants and/or a concentration of working fluid in the fluid within exhaust line 514.

Return line 518 is a fluid line configured to convey fluid having a relatively greater proportion of working fluid back to the HVACR system including the purge system 500. Return line 518 is connected to the membrane separation chamber 510 on a side having a relatively greater concentration of the working fluid compared to the intake line 504, for example on the same side, first side 510a, as intake line 504 when the membrane 512 passes contaminant and rejects working fluid, or on second side 510b, opposite the intake line 504 with respect to membrane 512 when the membrane 512 passes working fluid and rejects contaminant. In an embodiment, no pump is provided along return line 518. In an embodiment, a pump is included along return line 518.

Return valve 520 is a valve controlling flow of fluid within return line 518 and the HVACR system including purge system 500. Return valve 520 can be any suitable valve for controlling flow of the fluid in return line 518. In an embodiment, return valve 520 a closed position obstructing flow completely and an open position permitting flow. In an embodiment, return valve 520 includes one or more intermediate positions partially permitting and partially obstructing flow, or the flow can be continuously varied. In an embodiment, return valve 520 allows flow into a fluid line configured to convey fluid to the HVACR system. In an embodiment, return valve 520 directly permits or restricts flow directly into the point where working fluid is returned to the HVACR system.

In the embodiment shown in Figure 5, return valve 520 allows the fluid to be returned to the HVACR system at evaporator 522. Evaporator 522 can be, for example, evaporator 108 as described above and shown in Figure 1. Alternatively, return line 518 and return valve 520 could be arranged to return the fluid to the HVACR system at other locations along the circuit of the HVACR system, including one or more of a compressor such as compressor 102, the condenser 502, an expander such as expander 106, or other components of the HVACR system, or along any fluid line joining those elements of the circuit of the HVACR system, or combinations thereof.

Optionally, pressure sensors 524a-524c can be included in intake line 504, exhaust line 514, and return line 518, respectively. Each of pressure sensors 524a-524c can be any suitable pressure sensor capable of measuring the pressure within the respective fluid line. Pressure measurements from any or all of pressure sensors 524a-524c can be received at and subsequently processed by a controller 526, for example to determine operation of one or both of exhaust valve 516 and return valve 520. Controller 526 can process the pressure measurements from pressure sensors 524a-524c to determine differences in pressure at the respective pressure sensors. The differences in pressures can be expressed as ratios of the pressures. The differences in pressures can be used to determine concentrations of contaminant and/or working fluid in exhaust line 514 and/or return line 518, based, for example on a model correlating the concentrations with pressure differentials.

While the embodiment shown in Figure 5 includes a single membrane separation chamber 510, embodiments can include multiple membrane separation chambers, for example arranged as shown in Figure 4 and described above, including a pusher pump 508 upstream of the first membrane separation chamber, and with further chambers connected such that the return of working fluid from each separation chamber is in parallel until joining at a common return line, and the fluid having an increasing concentration of the contaminant is fed through the membrane separation chambers in series until reaching an exhaust line and exhaust valve.

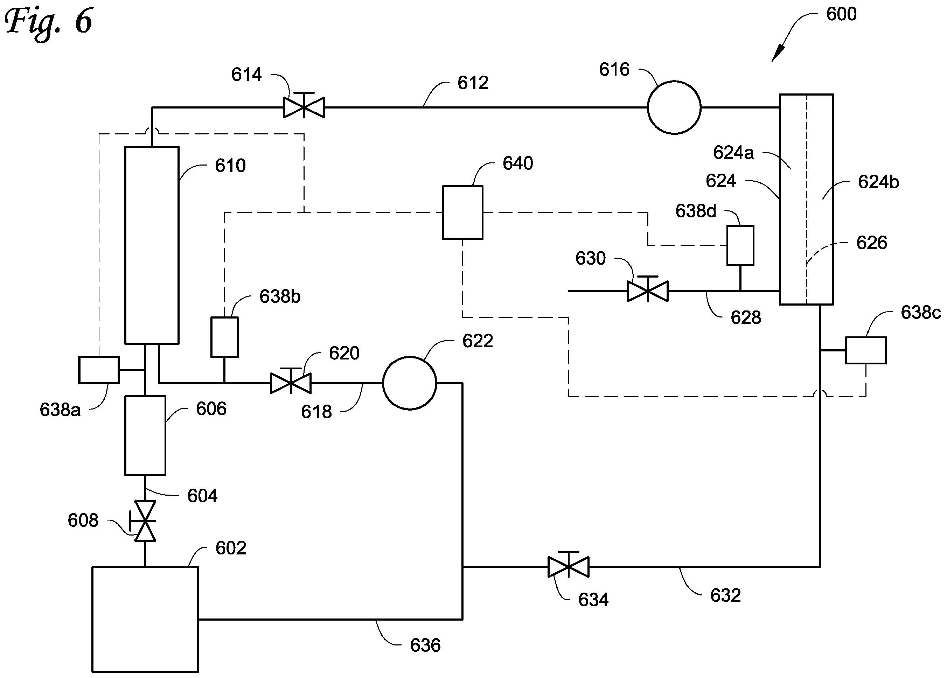

Figure 6 shows a hybrid purge system including a membrane and an adsorbent according to an embodiment. Hybrid purge system 600 receives fluid from a condenser 602 of an HVACR system. Intake line 604 receives the fluid from the condenser 602. Optionally, a filter and/or a dryer 606 are included along intake line 604. Intake valve 608 is included along intake line 604. Intake line 604 conveys the fluid to adsorbent tank 610. Interstage line 612 extends from the adsorbent tank 610. Interstage valve 614 is located along interstage line 612. Interstage pump 616 is also included on interstage line 612. Adsorbent return line 618 also is connected to the adsorbent tank 610. Adsorbent return valve 620 is located along adsorbent return line 618. Adsorbent return pump 622 is located along adsorbent return line 618. Interstage line 612 conveys fluid from the adsorbent tank 610 to membrane separation chamber 624. Membrane separation chamber 624 includes a first side 624a and a second side 624b, separated by separation membrane 626. Exhaust line 628 is in communication with first side 624a and extends to exhaust valve 630, which controls release to an ambient environment. Membrane return line 632 is in communication with second side 624b, and extends to join adsorbent return line 618 to form combined return line 636. Membrane return valve 634 can be included along membrane return line 632, prior to joining the adsorbent return line 618. Combined return line 636 conveys fluid to the condenser 602.

Condenser 602 can be, for example, condenser 104 of HVACR circuit 100 described above and shown in Figure 1. The condenser 602 includes a port in communication with the intake line 604, such that a fluid in condenser 602 can enter purge system 600.

Intake line 604 is a fluid line configured to direct fluid from condenser 602 to adsorbent tank 610. Optionally, a filter and/or dryer 606 can be included along the intake line 604. The filter and/or dryer can be used to condition the fluid flow in intake line 604 prior to it entering the adsorbent tank 610. The filter and/or dryer 606 can be, for example, a moisture filter configured to absorb moisture from the flow through intake line 604.

Intake valve 608 can be located along intake line 604 or where intake line 604 joins adsorbent tank 610. Intake valve 608 controls the flow of fluid into adsorbent tank 610. Intake valve 608 can be any suitable type of valve that can be controlled between an open position allowing flow and a fully closed position prohibiting flow. In an embodiment, intake valve 608 can further include one or more intermediate positions allowing a restricted flow rate, less than a fully open flow rate, through the intake valve 608. In an embodiment, intake valve 608 can be controlled based on an operating mode of the purge system 600, either a purge operation where intake valve 608 allows at least some flow or a regeneration operation where the intake line valve 608 completely obstructs flow.

Adsorbent tank 610 is a structure that contains an adsorbent material. The adsorbent material can be a material to which the working fluid can adsorb, but that contaminants such as non-condensable atmospheric gases will not adsorb to. The adsorbent material can be provided as powder, beads, or any other suitable structure of particle to pass fluid through such that the working fluid can adsorb to the adsorbent material. The adsorbent material can be, for example, a carbon- or silicon- based adsorbent material. The adsorbent material can be selected such that the adsorption and regeneration processes each can be performed at temperatures below approximately 150° C. The adsorbent material can be selected such that the adsorption and regeneration processes each can be performed at temperatures below approximately 100° C. The adsorbent material can be selected such that adsorption and release of the working fluid can be mediated by pressure or vacuum without requiring additional heating to be provided to the adsorbent material. The adsorbent tank 610 can be generally cylindrical in shape. An axis of the adsorbent tank 610 can extend in a vertical direction. In an embodiment where the adsorbent tank 610 extends in the vertical direction, the intake line 604 can provide flow into adsorbent tank 610 at a bottom of the adsorbent tank 610, and the interstage line 612 can extend from a top of the adsorbent tank 610. Adsorbent tank 610 can be a vertical separation column. In an embodiment, the height-width ratio of a vertical separation column using adsorbent tank 610 is selected to improve the effectiveness in separation working fluid.

The adsorbent in adsorbent tank 610 can be selected based on the compounds to recover from the mixture of working fluid and contaminants received at intake line 604. As non-limiting examples, the compounds to recover can include one or more of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof, or the like.

Interstage line 612 is a fluid line configured to convey fluid from adsorbent tank 610 to membrane separation chamber 624. Interstage line 612 can be any suitable fluid line for conveying the fluid leaving adsorbent tank 610.

Interstage valve 614 is a valve located along interstage line 612 or at a junction between adsorbent tank 610 and interstage line 612. Interstage valve 614 can be any suitable valve for controlling flow into or through interstage line 612. Interstage valve 614 is configured to have a fully closed position where it obstructs flow and at least one open position where it permits flow of fluid into or through interstage line 612. In an embodiment, interstage valve 614 includes a plurality of open positions permitting different quantities of flow or can be continuously varied with respect to the flow permitted. Interstage valve 614 can be in the closed position during a regeneration operation of the purge system 600 and in the open position during a purge operation of the purge system 600.

Interstage pump 616 is a pump located between interstage valve 614 and membrane separation chamber 624, disposed along interstage line 612. Interstage pump 616 can be any suitable pump for drawing in and expelling the fluid in interstage line 612 to direct the fluid towards membrane separation chamber 624.

Adsorbent return line 618 is a fluid line configured to convey working fluid from adsorbent tank 610 to combined return line 636, where it can subsequently be returned to an HVACR system including the purge system 600. Adsorbent return line can be any suitable fluid line for conveying the working fluid from adsorbent tank 610. Adsorbent return line 618 can be a fluid line capable of use under the negative pressure or vacuum provided by adsorbent return pump 622 during a regeneration operation.

Adsorbent return valve 620 controls flow through adsorbent return line 618 or between adsorbent tank 610 and adsorbent return line 618. The adsorbent return valve 620 can be any suitable valve for controlling flow into or through adsorbent return line 618. Adsorbent return valve 620 is configured to have a fully closed position where it obstructs flow and at least one open position where it permits flow of fluid into or through adsorbent return line 618. In an embodiment, adsorbent return valve 620 includes a plurality of open positions permitting different quantities of flow or can be continuously varied with respect to the flow permitted. Adsorbent return valve 620 can be in the open position during a regeneration operation of the purge system 600 and in the closed position during a purge operation of the purge system 600.

Adsorbent return pump 622 is a pump configured to draw in and expel fluid within adsorbent return line 618. Adsorbent return pump 622 is disposed along adsorbent return line 618, downstream of adsorbent return valve 620. Adsorbent return pump 622 can be any suitable pump for driving the fluid in adsorbent return line 618. Adsorbent return pump 622 can be configured to provide the interior of adsorbent tank 610 with a negative pressure or a vacuum when adsorbent return valve 620 is open and intake valve 608 and interstage valve 614 are closed. The negative pressure or vacuum can be negative pressure or vacuum sufficient to facilitate the release of working fluid from the adsorbent material in adsorbent tank 610.

In operation in a purge mode, intake valve 608 and interstage valve 614 are open, allowing fluid to enter the adsorbent tank 610, have working fluid adsorb to the adsorbent material contained therein, and exit through interstage line 612 for further separation in membrane separation chamber 612. In the purge mode, adsorbent return valve 620 is closed.

The purge system 600 can be operated in a regeneration mode to regenerate the adsorbent material in adsorbent tank 610 and to recover working fluid adsorbed to that adsorbent material. In the regeneration mode, adsorbent return valve 620 is open and adsorbent return pump 622 is in operation, while intake valve 608 and interstage valve 614 are closed. Adsorbent return pump 622 thus can produce a negative pressure or vacuum in adsorbent tank 610. The negative pressure or vacuum releases some or all of the working fluid adsorbed to the adsorbent material, which is drawn into adsorbent return line 618.

Membrane separation chamber 624 is a chamber separated into first side 624a and second side 624b by separation membrane 626. Membrane separation chamber 624 is configured to receive fluid from the interstage line 612 on first side 624a. Membrane separation chamber 624 is a chamber divided into a first side 624a and a second side 624b by membrane 626. In an embodiment, membrane 626 passes the contaminant, such as non-condensable gases such as atmospheric gases, and prohibits flow of the working fluid. In this embodiment, exhaust line 628 connects to the second side 624b, opposite membrane 626 from interstage line 612, and membrane return line 632 is connected to first side 624a. In an embodiment, the membrane 626 passes the working fluid and prohibits flow of the contaminant. In this embodiment, the exhaust line 628 is connected to the first side 624a, and the membrane return line 632 is connected to the second side 624b, on an opposite side of membrane 626 from the interstage line 612.

Separation membrane 626 is a selectively permeable membrane configured to pass one of working fluid or contaminant, and to reject the other. Separation membrane 626 can have any suitable size, shape, and position within the membrane separation chamber 624 that divides the chamber into first side 624a and second side 624b. In an embodiment, the separation membrane forms a plane dividing first side 624a from second side 624b. In an embodiment, the separation membrane can have a shape configured to increase a surface area of the membrane, such as folds, pleating, rolling, or any other suitable shape so long as it such a shape separates discrete first and second sides 624a,b, of the membrane separation chamber 624. The separation membrane 626 can be selective based on particle size or particle solubility. In an embodiment, separation membrane 626 is selective based on solubility. In an embodiment, separation membrane 626 is configured to pass working fluid and reject contaminant based on solubility. In an embodiment, separation membrane 626 is configured to pass at least one of the following based on solubility: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof, or the like.

Exhaust line 628 is a fluid line configured to convey fluid from membrane separation chamber 624 to exhaust valve 630. Exhaust line 628 can be any suitable fluid line for conveying the fluid from membrane separation chamber 624. Exhaust line 628 is connected to membrane separation chamber 624 on a side having a relatively greater concentration of contaminant. In an embodiment where separation membrane 626 passes the contaminant and rejects the working fluid, the exhaust line 628 is connected to membrane separation chamber 624 on second side 624b, opposite the membrane 626 from interstage line 612. In an embodiment where separation membrane 626 rejects the contaminant and passes the working fluid, exhaust line 628 can be connected to membrane separation chamber 624 on the same side of membrane 626 as the interstage line 612, first side 624a.

Exhaust valve 630 is a valve configured to control flow out of exhaust line 628 to an environment for receiving the contaminants. Exhaust valve 630 can be any suitable valve for controlling flow of the fluid in exhaust line 628. In an embodiment, exhaust valve 630 has a closed position obstructing flow completely and an open position permitting flow. In an embodiment, exhaust valve 630 includes one or more intermediate positions partially permitting and partially obstructing flow, or the flow can be continuously varied. In an embodiment, the environment is a tank or other receptacle. In an embodiment, the environment is an ambient environment of purge system 600. In an embodiment, exhaust valve 630 directly outlets to the environment. In an embodiment, exhaust valve 630 allows flow from exhaust line 628 to another line conveying the fluid to the environment. In an embodiment, exhaust valve 630 is operated based on differences in pressure between parts of purge system 600. In an embodiment, exhaust valve 630 is operated based on a model correlating differences in pressure in purge system 600 with a concentration of contaminants and/or a concentration of working fluid in the fluid within exhaust line 628.

Membrane return line 632 is a fluid line configured to return fluid from membrane separation chamber 624 to combined return line 636, where it can be returned to the HVACR system including purge system 600. Membrane return line 632 can be connected to membrane separation chamber 624 on a side having a relatively greater concentration of the working fluid. In an embodiment where separation membrane 626 passes the contaminant and rejects the working fluid, the membrane return line 632 is connected to membrane separation chamber 624 on first side 624a, on the same side of the membrane 626 as interstage line 612. In an embodiment where separation membrane 626 rejects the contaminant and passes the working fluid, membrane return line 632 can be connected to membrane separation chamber 624 on an opposite side of membrane 626 from the interstage line 612, second side 624b.

Membrane return valve 634 is a valve along membrane return line 632 or at a junction of membrane return line 632 and combined return line 636. Membrane return valve 634 is a valve configured to control the flow through membrane return line 632 or into combined return line 636. Membrane return valve can be can be any suitable valve for controlling flow through membrane return line 632 or into combined return line 636. Membrane return valve 634 is configured to have a fully closed position where it obstructs flow and at least one open position where it permits flow of fluid through membrane return line 632 or into combined return line 636. In an embodiment, membrane return valve 634 includes a plurality of open positions permitting different quantities of flow, or can be continuously varied with respect to the amount of flow permitted between a minimum and a maximum flow.

Combined return line 636 receives fluid high in working fluid from adsorbent return line 618 and membrane return line 632 and conveys it to a location in the HVACR system where the working fluid is returned. In the embodiment shown in Figure 6, combined return line 636 conveys the fluid to condenser 602. In an embodiment, combined return line 636 can convey the fluid to any one or more of the compressor, condenser 602, expander, or evaporator of the HVACR circuit of the HVACR system or to any other component of the HVACR circuit of the HVACR system, or to any of the fluid lines connecting those elements, components, and the like.

Purge system 600 can further include pressure sensors 638a-638d, located on intake line 604, adsorbent return line 618, membrane return line 632, and exhaust line 628, respectively. The pressure sensors 638a-638d are each configured to measure pressures of fluid within their respective fluid lines. The pressure readings from pressure sensors 638a-638d can be received at and subsequently processed by a controller 640, for example to determine operation of one or both of exhaust valve 630 and membrane return valve 634. Controller 640 can process the pressure measurements from pressure sensors 638a-638d to determine differences in pressure at the respective pressure sensors. The differences in pressures can be expressed as ratios of the pressures. The differences in pressures can be used to determine concentrations of contaminant and/or working fluid in exhaust line 628 and/or membrane return line 632, based, for example on a model correlating the concentrations with pressure differentials.

While the embodiment shown in Figure 6 shows one adsorbent tank 610 and one membrane separation chamber 624, it is appreciated that any number of adsorbent tanks and membrane separation chambers can be combined in a hybrid purge system. Multiple membrane separation chambers can be included according to the two membrane separation chambers as shown in Figure 4, or further including additional membrane separation chambers as described above. Multiple adsorbent tanks, each having their own separate regeneration system and return lines joining the common return line 636 can be included in series with the flow having relatively increasing concentrations of the contaminants as it passes through adsorbent tanks and/or membrane separation chambers. In an embodiment, the order of the adsorbent tank 610 and the membrane separation chamber 624 and their supporting lines can be reversed, such that membrane separation precedes the separation by adsorption of working fluid to the adsorbent material in adsorbent tank 610.

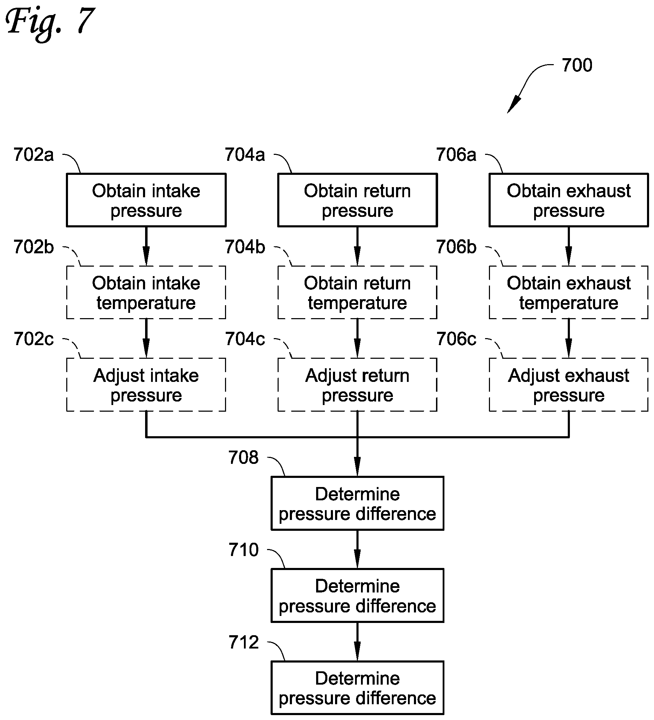

Figure 7 shows a flowchart of a method for controlling a purge system according to an embodiment. Method 700 includes obtaining an inlet pressure 702a, optionally obtaining an inlet temperature 702b, and optionally applying a temperature adjustment to the inlet pressure 702c. Method 700 further includes obtaining a return pressure 704a, optionally obtaining a return temperature 704b, and optionally applying a temperature adjustment to the return temperature 704c. Method 700 further includes obtaining an exhaust pressure 706a, optionally obtaining an exhaust temperature 706b, and optionally applying a temperature adjustment to the exhaust pressure 706c. Method 700 further includes determining pressure relationships for the inlet, return, and exhaust 708, correlating the pressure relationships to a purge effectiveness value 710, and controlling one or more of a return valve or an exhaust valve based on the purge effectiveness value 712.

An inlet pressure is obtained at 702a. The inlet pressure can be obtained using a pressure sensor located along an inlet line of a purge system, for example where the purge system receives fluid from an HVACR system, such as any of the intake lines described above and shown in Figures 1-6. Optionally, an inlet temperature can also be obtained at 702b. The inlet temperature can be an ambient temperature around the fluid line where the inlet pressure is obtained at 702a. The inlet temperature can be obtained using a temperature sensor at or near the pressure sensor used to obtain the inlet pressure (see e.g. pressure sensors of Figures 1-6). The inlet temperature obtained at 702b can optionally be used to apply an adjustment to the inlet pressure at 702c. The adjustment applied at 702c can be used to account for differences in temperature between the inlet, return, and exhaust of the purge system. The adjustment applied at 702c can be determined based on a reference temperature. The reference temperature can be a fixed value or a temperature obtained at one of the return or exhaust. The adjustment can further be determined based on the gas laws.

A return pressure is obtained at 704a. The inlet pressure can be obtained using a pressure sensor located along a return line of a purge system, for example where the purge system returns working fluid to an HVACR system, such as any of the return or combined return lines described above and shown in Figures 1-6. Optionally, a return temperature can also be obtained at 704b. The return temperature can be an ambient temperature around the fluid line where the return pressure is obtained at 704b (see e.g. pressure sensors of Figures 1-6). The return temperature can be obtained using a temperature sensor at or near the pressure sensor used to obtain the return pressure. The return temperature obtained at 704b can optionally be used to apply an adjustment to the return pressure at 704c. The adjustment applied at 704c can be used to account for differences in temperature between the inlet, return, and exhaust of the purge system. The adjustment applied at 704c can be determined based on a reference temperature. The reference temperature can be a fixed value or a temperature obtained at one of the inlet or exhaust. The adjustment can further be determined based on the gas laws.

An exhaust pressure is obtained at 706a. The exhaust pressure can be obtained using a pressure sensor located along an inlet line of a purge system, for example where the purge system receives fluid from an HVACR system, such as any of the exhaust lines or at any of the discharge or exhaust valves described above and shown in Figures 1-6. Optionally, an exhaust temperature can also be obtained at 706b. The exhaust temperature can be an ambient temperature around the fluid line where the exhaust pressure is obtained at 706a (see e.g. pressure sensors of Figures 1-6). The exhaust temperature can be obtained using a temperature sensor at or near the pressure sensor used to obtain the inlet pressure. The exhaust temperature obtained at 706b can optionally be used to apply an adjustment to the exhaust pressure at 706c. The adjustment applied at 706c can be used to account for differences in temperature between the inlet, return, and exhaust of the purge system. The adjustment applied at 706c can be determined based on a reference temperature. The reference temperature can be a fixed value or a temperature obtained at one of the inlet or return. The adjustment can further be determined based on the gas laws.

Pressure relationships for at least two of the inlet, return, and exhaust pressures are determined at 708. The pressure relationships can be determined based on raw values obtained at 702a, 704a, and 706a or temperature-adjusted values where an adjustment was applied at 702c, 704c, and 706c. The differences can be determined by, for example, computing ratios among each of the inlet, return, and exhaust pressures. The pressure relationships can be determined at 708 using a controller.

The pressure relationships determined at 708 are correlated to a purge effectiveness value 710. The purge effectiveness value can be, for example, a purge efficiency or a concentration of contaminants in the exhaust flow. The purge efficiency can be a ratio of the mass of working fluid per mass of non-condensables in an exhaust stream being exhausted by the purge system. The concentration of contaminants can be, for example, a concentration of non-condensable atmospheric gases in the fluid within the exhaust line. The purge effectiveness value can be relative amounts of each of the constituents of the fluid within the purge system, such as a percentage of non-condensables. The correlation at 710 can be based on a multi-dimensional map including points for pressure ratios among the inlet, return, and exhaust pressures that has a purge effectiveness value associated with each point on the map. The multi-dimensional map used at 710 can be particular to a specific HVACR system and a specific purge system included therein. The correlation at 710 can be obtained using a controller, which can be the same controller or a different controller from the one used to determine pressure relationships at 708.

One or more of a return valve or an exhaust valve are controlled based on the purge effectiveness value at 712 (see, e.g. return valves and exhaust valves of Figures 1 to 6). The control can be based on comparison of the purge effectiveness value to a threshold value governing an action, such as opening an exhaust valve or a return valve. The control can be control of a purge rate for the purge system, such as selecting a position of an exhaust valve of the purge system. When the purge effectiveness value indicates a high purge effectiveness, such as a high concentration of contaminants such as non-condensable atmospheric gases and/or a low concentration of working fluid, the exhaust valve can be directed to be opened to increase the discharge of the contaminants. When the purge effectiveness value indicates a low purge effectiveness, such as a high concentration of working fluid in the exhaust, the exhaust valve can be directed to restrict or obstruct flow out of the exhaust line, reducing the discharge of working fluid into the environment.

The method 700 can be carried out continuously or can iterate according to, for example, a set sampling schedule such as every minute. The sampling schedule can be selected based on the rate of change of purge effectiveness over time in a given purge system.

### Aspects:

It is understood that any of aspects 1-8 can be combined with any of aspects 9-13, 14-20, 21-30, 31-35, or 36-40. It is understood that any of aspects 9-13 can be combined with any of aspects 14-20, 21-30, 31-35, or 36-40. It is understood that any of aspects 14-20 can be combined with any of aspects 21-30, 31-35, or 36-40. It is understood that any of aspects 21-30 can be combined with any of aspects 31-35 or 36-40. It is understood that any of aspects 31-35 can be combined with any of aspects 36-40.
Aspect 1. A purge system for a heating, ventilation, air conditioning, and refrigeration (HVACR) system, comprising:
   a purge gas inlet configured to receive a mixture including one or more working fluids and one or more non-condensable gases;
   a first pump;
   one or more separation chambers, each separation chamber containing adsorbent material, each separation chamber configured to receive the mixture through a chamber valve;
   an exhaust port configured to release gas into an ambient environment, the exhaust port in fluid communication the one or more separation chambers by way of an exhaust valve;
   a working fluid return line in communication with at least one of the one or more separation chambers, the working fluid return line configured to be connected to the HVACR system; and a second pump, the second pump in communication with at least one of the one or more separation chambers by way of a return line valve and the working fluid return line.
Aspect 2. The purge system according to aspect 1, wherein the adsorbent material is configured to adsorb the one or more working fluids when the mixture is provided to the separation chamber through the chamber valve.
Aspect 3. The purge system according to any of aspects 1-2, wherein the adsorbent material is configured to release the one or more working fluids when the chamber valve and the exhaust valve are closed, the return line valve is open, and the second pump is in operation.
Aspect 4. The purge system according to any of aspects 1-3, wherein the first pump is between the purge gas inlet and the one or more separation chambers.
Aspect 5. The purge system according to any of aspects 1-4, wherein the first pump is between the one or more separation chambers and the exhaust port.
Aspect 6. The purge system according to any of aspects 1-5, further comprising a plurality of temperature sensors configured to measure temperatures at different points in the separation chamber and a controller configured to determine a temperature difference between temperature measurements from at least two of the plurality of temperature sensors and control the chamber valve, the exhaust valve, and the second pump based on the temperature difference.
Aspect 7. The purge system according to any of aspects 1-6, further comprising a sensor configured to measure a weight of the separation chamber and a controller configured to control the chamber valve, the exhaust valve, and the second pump based on the weight of the separation chamber.
Aspect 8. The purge system according to any of aspects 1-7, further comprising a pressure sensor configured to measure a pressure within the separation chamber, and a controller configured to control the chamber valve, the exhaust valve, and the second pump based on the pressure within the separation chamber.
Aspect 9. A heating, ventilation, air conditioning, and refrigeration (HVACR) system, comprising:
   a refrigeration circuit, comprising a compressor, a condenser, an expander, and an evaporator, the refrigeration circuit configured to circulate one or more working fluids; and
   a purge system, comprising:
      a purge gas inlet configured to receive a mixture including the one or more working fluids and one or more non-condensable gases;
      a first pump;
      one or more separation chambers, each separation chamber containing adsorbent material, each separation chamber configured to receive the mixture through a chamber valve;
      an exhaust port configured to release gas into an ambient environment, the exhaust port in fluid communication the one or more separation chambers by way of an exhaust valve;
      a working fluid return line in communication with at least one of the one or more separation chambers, the working fluid return line configured to be connected to the HVACR system; and a second pump, the second pump in communication with at least one of the one or more separation chambers by way of a return line valve and the working fluid return line.
Aspect 10. The HVACR system according to aspect 9, wherein the purge gas inlet is in fluid communication with the condenser.
Aspect 11. The HVACR system according to any of aspects 9-10, wherein the return line is in fluid communication with the evaporator.
Aspect 12. The HVACR system according to any of aspects 9-11, wherein the working fluid circuit circulates the one or more working fluids at pressures less than atmospheric pressure.
Aspect 13. The HVACR system according to any of aspects 9-12, wherein the one or more working fluids are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof.
Aspect 14. A method of purging a heating, ventilation, air conditioning, and refrigeration (HVACR) system, comprising:
   receiving a mixture of one or more working fluids and one or more non-condensable gases in a separation chamber, the separation chamber containing an adsorbent material;
   adsorbing at least some of the one or more working fluids to the adsorbent material;
   after adsorbing at least some of the one or more working fluids to the adsorbent material, exhausting the mixture through an exhaust port downstream of the separation chamber and in fluid communication with the separation chamber; and
   recovering the at least some of the one or more working fluids adsorbed by the adsorbent material by:
      closing a first valve upstream of the separation chamber,
      closing a second valve between the separation chamber and the exhaust port, and
      operating a recovery pump to reduce a pressure within the separation chamber, the pump being in fluid communication with the separation chamber and with a return line, the return line in fluid communication with the HVACR system.
Aspect 15. The method according to aspect 14, wherein the one or more working fluids are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof.
Aspect 16. The method according to any of aspects 14-15, wherein a temperature of the mixture is below approximately 100° C throughout the method and a temperature during the regeneration of the adsorbent is below approximately 100° C throughout the recovering of the at least some of the one or more working fluids.
Aspect 17. The method according to any of aspects 14-16, further comprising determining a change in temperature between two or more points within the separation chamber and determining when to recover the some of the at least one or more working fluids based on the change in temperature between the two or more points within the separation chamber.
Aspect 18. The method according to any of aspects 14-17, further comprising determining a mass of the separation chamber and determining, based on the mass of the separation chamber, when to recover the some of the at least one or more working fluids based on the change in temperature between the two or more points within the separation chamber.
Aspect 19. The method according to any of aspects 14-18, further comprising measuring a pressure within the separation chamber when recovering the at least some of the at least one or more working fluids, and based on the pressure, ending the recovering of the at least one or more working fluids.
Aspect 20. The method according to any of aspects 14-19, further comprising pressurizing the separation chamber with the mixture using a pump located upstream of the separation chamber.
Aspect 21. A purge system for a heating, ventilation, air conditioning, and refrigeration (HVACR) system, comprising:
   a purge gas inlet configured to receive a mixture including one or more refrigerants and one or more non-condensable gases;
   a pump;
   one or more separation chambers, each separation chamber comprising a membrane, the membrane dividing the separation chamber into a first side and a second side,
   wherein the purge gas inlet is in fluid communication with the first side of the separation chamber, and
   the membrane is configured to reject the one or more non-condensable gases;
   an exhaust port configured to release gas into an ambient environment, the exhaust port in fluid communication with the first sides of the one or more separation chambers; and
   a refrigerant return line in communication with at least one of the second sides of the one or more separation chambers, the refrigerant return line configured to be connected to the HVACR system.
Aspect 22. The purge system according to aspect 21, wherein the membrane in each of the one or more separation chambers is configured to reject the one or more non-condensable gases based on the solubility of the one or more non-condensable gases.
Aspect 23. The purge system according to any of aspects 21-22, wherein the membrane in each of the one or more separation chambers is coiled such that it has a cross-section having a spiral shape.
Aspect 24. The purge system according to any of aspects 21-23, wherein the pump is between the purge gas inlet and the one or more separation chambers.
Aspect 25. The purge system according to any of aspects 21-24, wherein the pump is between the one or more separation chambers and the exhaust port, and the purge system further comprises a second pump, the second pump located along the refrigerant return line.
Aspect 26. The purge system according to any of aspects 21-25, further comprising a first pressure sensor between the purge gas inlet and the one or more separation chambers, and a second pressure sensor between the one or more separation chambers and the exhaust port.
Aspect 27. The purge system according to aspect 26, further comprising:
   a discharge valve configured to control flow out of the exhaust port, and
   a controller configured to:
      receive a first pressure from the first pressure sensor;
      receive a second pressure from the second pressure sensor;
      determine a pressure relationship; and
      determine operation of the discharge valve based on the pressure relationship.
Aspect 28. The purge system according to aspect 27, further comprising a first temperature sensor between the purge gas inlet and the one or more separation chambers, and a second temperature sensor located between the one or more separation chambers and the exhaust port, wherein the controller is further configured to:
   determine a temperature adjustment based on one or more of a first temperature from the first temperature sensor and a second temperature from the second temperature sensor, and
   adjust one or more of the first pressure, the second pressure, or the pressure relationship based on the temperature adjustment.
Aspect 29. The purge system according to any of aspects 27-28, wherein the pressure relationship is a ratio between the first pressure and the second pressure.
Aspect 30. The purge system according to any of aspects 27-29, wherein determining operation of the discharge valve comprises comparing the pressure relationship to a threshold value.
Aspect 31. A heating, ventilation, air conditioning, and refrigeration (HVACR) system, comprising:
   a refrigeration circuit, comprising a compressor, a condenser, an expander, and an evaporator, the refrigeration circuit configured to circulate one or more refrigerants; and
   a purge system, comprising:
      a purge gas inlet configured to receive a mixture including the one or more refrigerants and one or more non-condensable gases from the refrigeration circuit;
      a pump;
      one or more separation chambers, each separation chamber comprising a membrane, the membrane dividing the separation chamber into a first side and a second side,
      wherein the purge gas inlet is in fluid communication with the first side of the separation chamber, and
      the membrane is configured to reject the one or more non-condensable gases;
   an exhaust port configured to release gas into an ambient environment, the exhaust port in fluid communication with the first sides of the one or more separation chambers; and
   a refrigerant return line in communication with at least one of the second sides of the one or more separation chambers, the refrigerant return line configured to be connected to the refrigeration circuit.
Aspect 32. The HVACR system according to aspect 31, wherein the purge gas inlet is in fluid communication with the condenser.
Aspect 33. The HVACR system according to any of aspects 31-32, wherein the return line is in fluid communication with the evaporator.
Aspect 34. The HVACR system according to any of aspects 31-33, wherein the refrigerant circuit is configured to circulate the one or more refrigerants at pressures less than atmospheric pressure.
Aspect 35. The HVACR system according to any of aspects 31-34, wherein the one or more refrigerants are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof.
Aspect 36. A method of purging a heating, ventilation, air conditioning, and refrigeration (HVACR) system, comprising:
   receiving a mixture of one or more refrigerants and one or more non-condensable gases in a separation chamber, the separation chamber including a membrane dividing the separation chamber into a first side and a second side, the mixture being received on the first side of the separation chamber;
   passing at least some of the one or more refrigerants through the membrane, from the first side of the separation chamber to the second side of the separation chamber;
   after passing at least some of the one or more refrigerants through the membrane, exhausting the mixture through an exhaust port downstream of the separation chamber and in fluid communication with the first side of the separation chamber; and
   providing fluid communication between the second side of the separation chamber and the HVACR system to return at least some of the one or more refrigerants to the HVACR system.
Aspect 37. The method according to aspect 36, wherein the one or more refrigerants are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane and combinations thereof.
Aspect 38. The method according to any of aspects 36-37, wherein a temperature of the mixture is below approximately 100° C throughout the method and a temperature of the one or more refrigerants passed through the membrane is below approximately 100° C throughout the method.
Aspect 39. The method according to any of aspects 36-38, further comprising determining a first pressure upstream of the separation chamber, determining a second pressure downstream of the separation chamber, and wherein exhausting the mixture comprises opening a valve controlling flow through the exhaust port when a difference between the first pressure and the second pressure exceeds a threshold value.
Aspect 40. The method according to any of aspects 36-39, further comprising pressurizing the separation chamber with the mixture using a pump located upstream of the separation chamber.

The examples disclosed in this application are to be considered in all respects as illustrative and not limitative. The scope of the invention is indicated by the appended claims rather than by the foregoing description; and all changes which come within the meaning and range of equivalency of the claims are intended to be embraced therein.

## Claims

1. A purge system for a heating, ventilation, air conditioning, and refrigeration (HVACR) system, comprising:
a purge gas inlet configured to receive a mixture including one or more working fluids and one or more non-condensable gases;
a first pump;
one or more separation chambers, each separation chamber containing adsorbent material, each separation chamber configured to receive the mixture through a chamber valve;
an exhaust port configured to release gas into an ambient environment, the exhaust port in fluid communication with the one or more separation chambers by way of an exhaust valve;
a working fluid return line in communication with at least one of the one or more separation chambers, the working fluid return line configured to be connected to the HVACR system; and
a second pump, the second pump in communication with at least one of the one or more separation chambers by way of a return line valve and the working fluid return line.

2. The purge system of claim 1, wherein the adsorbent material is configured to adsorb the one or more working fluids when the mixture is provided to the separation chamber through the chamber valve, and the adsorbent material is configured to release the one or more working fluids when the chamber valve and the exhaust valve are closed, the return line valve is open, and the second pump is in operation.

3. The purge system of claim 1 or 2, wherein the first pump is between the purge gas inlet and the one or more separation chambers.

4. The purge system of claim 1 or 2, wherein the first pump is between the one or more separation chambers and the exhaust port.

5. The purge system of any preceding claim, further comprising a plurality of temperature sensors configured to measure temperatures at different points in the separation chamber and a controller configured to determine a temperature difference between temperature measurements from at least two of the plurality of temperature sensors and control the chamber valve, the exhaust valve, and the second pump based on the temperature difference.

6. The purge system of any preceding claim, further comprising a sensor configured to measure a weight of the separation chamber and a controller configured to control the chamber valve, the exhaust valve, and the second pump based on the weight of the separation chamber.

7. The purge system of any preceding claim , further comprising a pressure sensor configured to measure a pressure within the separation chamber, and a controller configured to control the chamber valve, the exhaust valve, and the second pump based on the pressure within the separation chamber.

8. A heating, ventilation, air conditioning, and refrigeration (HVACR) system, comprising:
a refrigeration circuit, comprising a compressor, a condenser, an expander, and an evaporator, the refrigeration circuit configured to circulate one or more working fluids; and
the purge system according to any of claims 1-7.

9. A method of purging a heating, ventilation, air conditioning, and refrigeration (HVACR) system, comprising:
receiving a mixture of one or more working fluids and one or more non-condensable gases in a separation chamber, the separation chamber containing an adsorbent material;
adsorbing at least some of the one or more working fluids to the adsorbent material;
after adsorbing at least some of the one or more working fluids to the adsorbent material,
exhausting the mixture through an exhaust port downstream of the separation chamber and in fluid communication with the separation chamber; and
recovering the at least some of the one or more working fluids adsorbed by the adsorbent material by:
closing a first valve upstream of the separation chamber,
closing a second valve between the separation chamber and the exhaust port, and
operating a recovery pump to reduce a pressure within the separation chamber, the pump being in fluid communication with the separation chamber and with a return line, the return line in fluid communication with the HVACR system.

10. The method of claim 9, wherein the one or more working fluids are selected from the group consisting of: 1-chloro-3,3,3 trifluoropropene, 1-chloro-3,3,3 trifluoropropene (E), 1-chloro-3,3,3 trifluoropropene (Z), 2-chloro-3,3,3 trifluoropropene, 1,1,dichloro-3,3,3 trifluoropropene, 1,2 dichloro-3,3,3 trifluoropropene (E), 1,2 dichloro-3,3,3 trifluoropropene (Z), 1,3,3,3 tetrafluoropropene (E), 1,3,3,3 tetrafluoropropene (Z), 2,3,3,3, tetrafluoropropene, 1,1,2 trichloro-3,3,3 trifluoropropene, 1,2 dichloroethylene (E), 1,2 dichloroethylene (Z), 1,1 dichloroethylene, 1,1,1,4,4,4 hexafluorobutene (Z), 1,1,1,4,4,4 hexafluorobutene (E), 1,1,3,3 tetrafluoropropane, 1,1,1,2,3 pentafluoropropane, 1,1,2,3,3 pentafluoropropane, 1,1,1,3,3 pentafluoropropane, 1,1,1,2,2 pentafluoropropane, 1,1,1,2,2,3 hexafluoropropane, 1,1,1,2,3,3 hexafluoropropane, 1,1,1,3,3,3 hexafluoropropane, isopentane, pentane, cyclopentane, 1,1 difluoroethane, 1,2-difluoroethane, difluoromethane, 1,1,1,2 tetrafluoroethane, 1,1 difluoroethene, 1,2 difluoroethene (E), 1,2 difluorethene (Z), and 2,2-dichloro-1,1,1-trifluoroethane, and combinations thereof.

11. The method of claim 10, wherein a temperature of the mixture is below approximately 100° C throughout the method and a temperature during the regeneration of the adsorbent is below approximately 100° C throughout the recovering of the at least some of the one or more working fluids.

12. The method of claim 10 or 11, further comprising determining a change in temperature between two or more points within the separation chamber and determining when to recover the some of the at least one or more working fluids based on the change in temperature between the two or more points within the separation chamber.

13. The method of any of claims 10 to 12, further comprising determining a mass of the separation chamber and determining, based on the mass of the separation chamber, when to recover the some of the at least one or more working fluids based on the change in temperature between the two or more points within the separation chamber.

14. The method of any of claims 10 to 13, further comprising measuring a pressure within the separation chamber when recovering the at least some of the at least one or more working fluids, and based on the pressure, ending the recovering of the at least one or more working fluids.

15. The method of any of claims 10 to 14, further comprising pressurizing the separation chamber with the mixture using a pump located upstream of the separation chamber.
